# EUROPEAN PATENT APPLICATION

(11) **EP 4 510 320 A1**
(43) Date of publication of application: **19.02.2025**
(21) Application number: 22962289.9
(22) Date of filing: 17.10.2022
(51) Int. Cl.: H01M 50/107

(54) **BATTERY CELL AND MANUFACTURING METHOD THEREFOR, BATTERY, AND ELECTRIC DEVICE**

(71) Applicant: Contemporary Amperex Technology Co., Limited, Ningde, Fujian 352100 (CN)
(72) Inventor: SUN, Dongsheng, Ningde, Fujian 352100 (CN); CHAI, Zhisheng, Ningde, Fujian 352100 (CN); GU, Hui, Ningde, Fujian 352100 (CN); CHI, Qingkui, Ningde, Fujian 352100 (CN); JIN, Haizu, Ningde, Fujian 352100 (CN)
(74) Representative: Kraus & Lederer PartGmbB
(86) International application number: PCT/CN2022/125655
(87) International publication number: WO 2024/082091

(57) **Abstract**

Provided are a battery cell, a method for manufacturing a battery cell, a battery, and an electric device. The battery cell (100) includes: a housing (10) provided with a first electrode lead-out portion (22) and a second electrode lead-out portion that have opposite polarities; an electrode assembly (3) arranged in the housing (10), the electrode assembly (3) including an electrode body (31), and a first tab (32) and a second tab (33) that extend from one side of the electrode body (31); and a current collector assembly (4) arranged at a side of the electrode body (31) close to the first tab (32) and the second tab (33). The current collector assembly (4) includes a first current collector (42) and a second current collector (43). The first tab (32) and the first electrode lead-out portion (22) are electrically connected to each other by the first current collector (42), and the second tab (33) and the second electrode lead-out portion are electrically connected to each other by the second current collector (43).

## Description

### FIELD

The present disclosure relates to the field of battery technologies, and more particularly, to a battery cell, a method for manufacturing a battery cell, a battery, and an electric device.

### BACKGROUND

Since batteries such as lithium-ion batteries have advantages such as high energy density, high power density, high cycling frequency, and long storage time, the batteries have been widely used in electric devices such as electric vehicles.

However, a structure design of a current battery cell results in low energy density. Thus, how to optimize the structure of the battery cell has been a challenge for the industry.

### SUMMARY

An objective of the present disclosure is to optimize a structure of a battery cell.

According to one embodiment of the present disclosure, a battery cell is provided. The battery cell includes a housing, an electrode assembly, and a current collector assembly. The housing is provided with a first electrode lead-out portion and a second electrode lead-out portion that have opposite polarities. The electrode assembly is arranged in the housing. The electrode assembly includes an electrode body, and a first tab and a second tab that extend from one side of the electrode body. The current collector assembly is arranged at a side of the electrode body close to the first tab and the second tab. The current collector assembly includes a first current collector and a second current collector. The first tab and the first electrode lead-out portion are electrically connected to each other by the first current collector, and the second tab and the second electrode lead-out portion are electrically connected to each other by the second current collector.

In these embodiments, the first tab and the second tab extend from one end of the electrode body. Thus, a space for the electrical connection is reserved at only one end of the electrode assembly, and there is no need for two ends of the battery cell to be provided with electrode lead-out portions. In this way, an overall energy density of the battery cell can be effectively improved, and a volume of the battery cell can be reduced when a capacity of the battery cell is constant. In this way, the battery can be easily mounted in an electric device with a limited height space, or when a volume of the battery cell is constant, the capacity of the battery cell can be increased, thereby expanding an endurance capacity of a battery.

In some embodiments, the first current collector at least partially abuts with a surface of the first tab facing away from the electrode body. The second current collector at least partially abuts with a surface of the second tab facing away from the electrode body.

In these embodiments, the first current collector can be easily electrically connected to a first tab portion in each layer of the first tab, and the second current collector can be easily electrically connected to a second tab portion in each layer of the second tab. Therefore, reliability of an electrical connection between the current collector and the corresponding tab can be improved, and an overcurrent capability can be enhanced.

In some embodiments, the housing includes an accommodation portion having an opening, and an end cover assembly covering the opening. The end cover assembly includes an end cover body and the first electrode lead-out portion. The first electrode lead-out portion is arranged at the end cover body in an insulation manner, and the end cover assembly serves as the second electrode lead-out portion. The second current collector is electrically connected to the end cover body.

In these embodiments, the first electrode lead-out portion is an electrode terminal, and the second electrode lead-out portion is the end cover body. Thus, one electrode terminal can be omitted, and the structure of the battery cell can be simplified. As a result, assembly difficulty can be lowered, and costs can be saved. Since only one electrode terminal is need to be arranged at the end cover body, a cross sectional area of the electrode terminal can be easily increased to improve the overcurrent capability. In addition, more space for wiring or arranging temperature acquisition components and the like can be saved for the end cover body. Moreover, the accommodation portion has a large surface area, which can improve the overcurrent capability and facilitate welding to the second current collector. In addition, compared with a side wall of the accommodation portion serving as the second lead-out portion, the end cover body serves as the second electrode lead-out portion, which can avoid a busbar from occupying a space between adjacent battery cells. As a result, a spacing between adjacent battery cells can be reduced. In this way, a layout of a plurality of battery cells of the battery can be more compact, thereby increasing the energy density of the battery.

In some embodiments, the current collecting assembly further includes an insulation base. The first current collector and the second current collector are connected to the insulation base and insulated from each other by the insulation base.

In these embodiments, the current collector assembly has an integral structure, which simplifies an electrical connection structure inside the battery cell, and further saves an internal space of the battery cell. In addition, with this structure, a weight of the current collector assembly can be reduced, production costs of components can be lowered. The first current collector and the second current collector are supported by the insulation base, which can improve an overall rigidity, and thus deformation does not easily occur. Therefore, a stable mounting can be realized, thereby improving electrical connection reliability. Moreover, since there is no need to separately mounting the first current collector, the second current collector, and the insulation base, this design can also lower the assembly difficulty. As a result, it is advantages for a battery cell with a smaller cross section size, and assembly efficiency can be improved. In addition, the first current collector and the second current collector are insulated from each other through the insulation base integrated with the first current collector and the second current collector. Therefore, insulation reliability can be improved, and an influence of assembly error or vibration on insulation performance can be reduced, thereby improving reliability and safety of the battery cell during its operation.

In some embodiments, the first current collector, the second current collector, and the insulation base are integrally formed through injection molding.

In these embodiments, integral formation through the injection molding can lower difficulty in processing and assembling the components in the current collector assembly, which can improve producing efficiency of the battery cell. In addition, a protruding structure and a recessed structure matching with each other can be easily arranged between the first current collector and the second current collector and the insulation base. In this way, bonding strength of the first current collector and the second current collector with the insulation base can be increased, thereby increasing firmness of the first current collector and the second current collector arranged at the insulation base.

In some embodiments, the insulation base includes a first insulation portion having a first opening and a second opening. The first current collector is at least partially accommodated in the first opening, and the second current collector is at least partially accommodated in the second opening. The first insulation portion is partially located between the first opening and the second opening and separates the first current collector from the second current collector.

In these embodiments, the first current collector is at least partially accommodated in the first opening, and the second current collector is at least partially accommodated in the second opening. In this way, the current collector can be better connected to the insulation base, realizing a reliable fixation. In addition, the dimension of the battery cell in a height direction can be reduced, reducing a volume of the battery cell and improving the energy density. Further, the first insulation portion is partially located between the first opening and the second opening, which can provide an insulation for the first current collector and the second current collector, thereby improving insulation reliability.

In some embodiments, an inner side wall of the first opening has a second groove, and the first current collector is provided with a protrusion at an outer side wall of the first current collector engaged with the first opening, and the protrusion is embedded into the second groove to join the first current collector to the insulation base; and/or an inner side wall of the second opening has a second groove, and the second current collector is provided with a protrusion at an outer side wall of the second current collector engaged with the second opening, and the protrusion is embedded into the second groove to join the second current collector to the insulation base.

In these embodiments, the first current collector is at least partially accommodated in the first opening, and the second current collector is at least partially accommodated in the second opening. In this way, the current collector can be better connected to the insulation base, realizing the reliable fixation. In addition, the dimension of the battery cell in the height direction can be reduced, reducing the volume of the battery cell and improving the energy density. Further, the first insulation portion is partially located between the first opening and the second opening, and provides the insulation for the first current collector and the second current collector, thereby improving the insulation reliability.

In some embodiments, the protrusion has a first through hole. The insulation base is provided with a limit post embedded into the first through hole.

In these embodiments, by forming the first through hole at the protrusion, when the insulation base, the first current collector, and the second current collector are formed through the injection molding, a bonding force between the current collector and the insulation base can be further increased. Therefore, the fixation of the first current collector and the second current collector to the insulation base is firmer.

In some embodiments, the battery cell further includes an insulation sheet arranged between the second current collector and the first electrode lead-out portion.

In these embodiments, the insulation sheet can separate the second current collector and the first electrode lead-out portion that have opposite polarities. In this way, the insulation performance can be ensured, thereby avoiding a short circuit and improving the reliability and safety of the battery cell during its operation.

In some embodiments, the battery cell further includes a spacer arranged between the first current collector and the first electrode lead-out portion. A surface of the spacer facing towards the end cover assembly and a surface of the insulation sheet facing towards the end cover assembly are flush with each other, and are flush with or higher than a surface of the first insulation portion.

In these embodiments, by providing the space and allowing the space and the insulation sheet to be flush with each other, a uniform contact between the end cover assembly and the current collector assembly can be achieved, which is beneficial to improve overall structural rigidity, and enables the current collector assembly to be uniformly stressed. In this way, the current collector assembly can be prevented from being displaced or deformed when being subjected to vibration or impact, thereby ensuring the electrical connection stability. Therefore, the reliability and safety of the battery cell during its operation can be improved.

In some embodiments, an edge of the first current collector close to the accommodation portion is surrounded by the insulation base.

In these embodiments, the edge of the first current collector close to the accommodation portion is surrounded by the insulation base. With this arrangement, a reliable insulation between the first current collector and the accommodation portion can be ensured, and even when the battery cell is subjected to the vibration or the impact, the first current collector and the accommodation portion cannot be in directly contact with each other. In this way, a short circuit between the accommodation portion and first current collectors that have different polarities can be avoided, thereby improving the reliability and safety of the battery cell during its operation.

In some embodiments, the end cover assembly further includes a first insulation member arranged between the end cover body and the current collector assembly. An end surface of the first insulation member closest to the electrode assembly is flush with an end surface of the first electrode lead-out portion closest to the electrode assembly.

In these embodiments, the first insulation member and the first electrode lead-out portion can be both supported by the current collector assembly. As a result, stability of the overall structure can be improved. In this way, a position of the first electrode lead-out portion can be kept constant, and a deformation amount of the current collector assembly can be reduced, thereby improving reliability of the internal electrical connection of the battery cell.

In some embodiments, the insulation base includes a first insulation portion having the first opening, and a second insulation portion connected to the first insulation portion. The first current collector includes a first portion engaged with the first opening and electrically connected to the first tab, and a second portion connected to the first portion and overlapping with the second insulation portion. The second portion is electrically connected to the first electrode lead-out portion.

In these embodiments, the first current collector includes the first portion and the second portion. In this way, the first tab and the first electrode lead-out portion can be connected to different regions of the first current collector respectively. In this way, deformation and damage of the first current collector due to repeated welding can be avoided, thereby improving welding reliability. Moreover, the second portion overlaps with the second insulation portion, which can provide stable support for the second portion to avoid deformation of the second portion. In addition, insulation between the first current collector and the second tab can be realized by providing the second insulation portion. Therefore, insulation reliability can be improved, and a short circuit of the battery cell can be avoided during the operation of the battery cell.

In some embodiments, the first electrode lead-out portion is arranged at a central region of the end cover body. The second insulation portion is arranged at a central region of the first insulation portion.

In these embodiments, the first electrode lead-out portion is arranged at the central region of the end cover body, which is beneficial to increasing a cross-sectional area of the first electrode lead-out portion. This not only facilitates an electrical connection, but also improves the overcurrent capability. Moreover, it is convenient to connect the first electrode lead-out portion of one battery cell to the second electrode lead-out portion of an adjacent battery cell through the busbar, which is beneficial to increasing a width of the busbar and improving the overcurrent capability.

In some embodiments, a projection of the first electrode lead-out portion on a cross-section of the accommodation portion overlaps with a projection of the second current collector on the cross-section of the accommodation portion. The second insulation portion protrudes towards the first electrode lead-out portion relative to the first insulation portion. The second portion protrudes towards the first electrode lead-out portion relative to the first portion.

In these embodiments, considering that in a case where the first electrode lead-out portion and the second current collector have an overlapping region, a distance between the second portion and the second current collector is set to be relatively small to achieve the electrical connection between the second portion and the first electrode lead-out portion, which enables that the short circuit is likely to occur. By allowing the second insulation portion to protrude towards the first electrode lead-out portion relative to the first insulation portion, the second portion may be offset from a part of the second current collector connected to the second tab in a height direction. thereby avoiding the short circuit between the second portion and the second current collector to improve the insulation reliability.

In some embodiments, the first electrode lead-out portion has a first groove formed at an inner end surface of the first electrode lead-out portion. The second portion is at least partially located in the first groove.

In these embodiments, the first groove is formed at the inner end surface of the first electrode lead-out portion, and the second portion is at least partially located in the first groove. Thus, an occupied height of the current collector assembly can be reduced, thereby reducing a height of the battery cell. Moreover, this structure can simultaneously provide support for the first insulation member and the first electrode lead-out portion through the current collector assembly. Therefore, the stability of the overall structure can be improved. In addition, the first electrode lead-out portion has a stable position, thereby improving the reliability of the internal electrical connection of the battery cell.

In some embodiments, the end cover assembly further includes a first insulation member arranged between the end cover body and the current collector assembly. The first insulation member covers a region outside an inner end surface of the first electrode lead-out portion in a radial direction of the first electrode lead-out portion. The first groove is formed by the first insulation member and the inner end surface of the first electrode lead-out portion. The second portion is at least partially located in the first groove.

In these embodiments, there is no need to machine the first groove at the inner end surface of the first electrode lead-out portion. As a result, processing difficulty of the first electrode lead-out portion can be lowered. In addition, the current collector assembly only needs to provide support for the first insulation member, and there is no need to consider an alignment between the end surface of the first insulation member closest to the electrode assembly and the end surface of the first electrode lead-out portion closest to the electrode assembly. Therefore, processing accuracy requirements of the components can be lowered.

In some embodiments, the first groove has a depth equal to or smaller than a height by which the second portion protrudes from the first portion.

In these embodiments, even when there is a processing error on the first groove or an error on the height by which the second portion protrudes from the first portion, the second portion can be in reliable contact with a groove bottom of the first groove. Thus, an assembly gap between the second portion and the first electrode lead-out portion can be avoided, thereby ensuring the reliability of the electrical connection between the first electrode lead-out portion and the second portion.

In some embodiments, the second insulation portion has a side wall located outside the first opening and extending beyond an outer side wall of the second portion.

In these embodiments, the side wall of the second insulation portion extends beyond the outer side wall of the second portion. In this way, the second portion can be spaced apart from the second current collector. In addition, the second portion can be prevented from being brought into contact with the second current collector. Therefore, the insulation reliability can be ensured, thereby improving the reliability and safety of the battery cell during its operation.

In some embodiments, at least one corner of the first portion facing away from the second portion has a first notch configured to be engaged with a first positioning portion in an injection mold to position the first current collector.

In these embodiments, when the current collector assembly is formed through the injection molding, the first current collector can be positioned by the first notch to improve a position accuracy of the first current collector. In addition, since a circumferential dimension of an inner edge of the first current collector is small, and the inner edge is formed as a bottleneck region of the overcurrent area, by forming the first notch at the corner of the first portion facing away from the second portion, an overcurrent capacity of the first current collector would not be affected.

In some embodiments, the insulation base includes a first insulation portion having a second opening. The second current collector includes a third portion engaged with the second opening and electrically connected to the second tab and a fourth portion at least partially connected to an edge of the third portion close to the accommodation portion. The fourth portion is electrically connected to the end cover body.

In these embodiments, the second current collector can be easily machined. In addition, after the second current collector and the insulation base are integrally formed, the second current collector can be conveniently electrically connected directly or indirectly to the end cover body by the fourth portion. Thus, the second tab can be electrical connected to the end cover body serving as the second electrode lead-out portion.

In some embodiments, at least one corner of the third portion facing away from the fourth portion has a second notch configured to be engaged with a second positioning portion in an injection mold to position the second current collector.

In these embodiments, when the current collector assembly is formed through the injection molding, the second current collector can be positioned by the second notch to improve position accuracy of the second current collector. In addition, since the bent fourth portion is arranged at an outer edge of the second current collector, by forming the second notch at the corner of the third portion facing away from the fourth portion, processing of the second notch and positioning of the second current collector can be facilitated.

In some embodiments, an extension length of the fourth portion in a circumferential direction of the accommodation portion is equal to or smaller than the edge of the third portion close to the accommodation portion.

In these embodiments, processing difficulty of the second current collector can lowered, and the second current collector can be directly formed by bending a thin plate structure. Therefore, overall structural strength of the second current collector can be improved, and connection reliability between the third portion and the fourth portion can be enhanced.

In some embodiments, the fourth portion extends around the accommodation portion.

In these embodiments, the fourth portion extends around the accommodation portion. In this way, a length of direct or indirect electrical connection between the fourth portion and the end cover body can be increased. In this way, the connection reliability can be improved, and the overcurrent capability can be increased.

In some embodiment, the fourth portion is angled to the third portion.

In these embodiments, the fourth portion is angled to the third portion. With this arrangement, an area of the electrical connection between the fourth portion and the side wall of the accommodation portion or the end cover body can be increased, thereby facilitating the electrical connection through the welding and improving the electrical connection reliability.

In some embodiment, the fourth portion extends towards the end cover assembly.

In these embodiments, the fourth portion extends away from the electrode assembly. In this way, it is possible to prevent active materials from peeling off due to an insertion of the fourth portion between electrode plates of the electrode assembly when being subject to vibration or impact. Further, it is also possible to prevent the fourth portion from being brought into contact with the electrode plates with opposite polarity to occur short circuit, thereby improving the insulation reliability. Moreover, the fourth portion is closer to the opening of the accommodation portion, and thus the fourth portion can be easily welded to a side wall of the accommodation portion through the opening, thereby improving a welding quality.

In some embodiment, the accommodation portion has a side wall. The end cover assembly further includes a first insulation member arranged between the end cover body and the current collector assembly. A first gap is at least formed in a region corresponding to the fourth portion between the first insulation member and the side wall, and the fourth portion is located in the first gap.

In these embodiments, the fourth portion is located in the first gap between the first insulation member and the accommodation portion, and thus can share a space with the first insulation member. An inner side of the fourth portion is insulated by the first insulation member. In addition, it is possible to prevent the active materials from falling off due to the insertion of the fourth portion between the electrode plates of the electrode assembly when being subject to the vibration or the impact. Further, it is also possible to prevent the fourth portion from being brought into contact with the electrode plates of the opposite polarities to occur the short circuit, thereby improving the insulation reliability. Moreover, the fourth portion is closer to the opening of the accommodation portion, and thus the fourth portion can be easily welded to the side wall of the accommodation portion through the opening. When welding is used, the fourth portion and the side wall can be welded to each other inside the accommodation portion, which can improve the welding quality or facilitate a direct electrical connection between the fourth portion and the end cover body.

In some embodiment, the housing is of a cylindrical shape. The first insulation member is of a circular ring shape. The first insulation member has an outer diameter d. The end cover body has an outer diameter D. The fourth portion has a thickness δ, where d ≤ D-2*δ.

In these embodiments, an outer wall of the first insulation member is constructed with a circumferential surface, which is convenient for processing. In addition, when assembling the end cover assembly where the first insulation member is located, the first insulation member does not need to be aligned with the fourth portion circumferentially, which is convenient for the assembling, thereby improving the assembly efficiency.

In some embodiment, the accommodation portion has the side wall. The second current collector is electrically connected to the end cover body by the side wall.

In these embodiments, the second current collector is electrically connected to the end cover body by the side wall. In this way, requirements on a length of an outer end connection part of the second current collector can be reduced, and requirements on a structure of the end cover body can also be reduced. The end cover body can be designed to have a flat plate structure, and a connection of the end cover body to the second current collector does not need to be considered. As a result, the structure of the end cover body can be simplified, and the manufacturing difficulty can be lowered.

In some embodiment, the end cover body has a bent portion protruding towards an inner side of the end cover body and arranged close to the accommodation portion. The second current collector is electrically connected to the bent portion.

In these embodiments, the second current collector is electrically connected to the end cover body by the bent portion. In this way, a contact area between the second current collector and the end cover body can be increased. For example, when an electrical connection is realized through the welding, the connection reliability can be improved, and the contact area can be increased. In addition, this structure is also suitable for a case where the accommodation portion is insulated from the end cover body, or in a case where a weld peeling occurs between the end cover body and the accommodation portion, the second current collector can reliably output electric energy to the end cover body. Moreover, a problem that the overcurrent capacity is affected due to the thin accommodation portion and the thin end cover body can be solved.

In some embodiment, a second gap is formed between the bent portion and the accommodation portion. An outer end of the second current collector is located in the second gap.

In these embodiments, the second current collector is in contact with a side wall of the bent portion facing towards the accommodation portion. In this way, the electrical connection can be easily realized through the welding, and an electrical connection area between the second current collector and the bent portion can also be increased. Therefore, the electrical connection reliability can be improved, and a stable position of the second current collector can be maintained.

In some embodiments, the first tab and the second tab are spaced apart from each other in a circumferential direction of the electrode assembly.

In these embodiments, with such an arrangement of the first tab and the second tab, tabs with different polarities can be separated from each other better in space, and an electrolyte can also infiltrate into the electrode body through a separated region. Therefore, the electrolyte fully reacts with active substances on the electrode plate during a charging and a discharging of the battery cell.

In some embodiments, a part of the first current collector connected to the second tab has a shape same as a shape of an end surface of the first tab, and/or a part of the second current collector connected to the second tab has a shape same as a shape of an end surface of the second tab.

In these embodiments, an entire end surface of the first tab and/or the second tab can be easily electrically connected to a corresponding current collector to ensure current transmission capability. On this basis, a redundant area of the current collector can be reduced, which in turn saves materials.

In some embodiments, a part of the first current collector connected to the first tab covers the first tab, and/or a part of the second current collector connected to the second tab covers the second tab.

In these embodiments, the entire end surface of the first tab and/or the second tab can be electrically connected to the corresponding current collector to ensure the current transmission capability.

In some embodiments, the electrode assembly has a winding structure. At least one of the first tab and the second tab has a width gradually increasing from a center to an outer side of the at least one of the first tab and the second tab in a radial direction of the winding structure.

In these embodiments, a spacing between first tab portions of each group of adjacent layers of the first tab can be uniformly distributed, or a spacing between second tab portions of each group of adjacent layers of the second tab can be uniformly distributed. In addition, by increasing a width of a tab in an outer layer region in a winding direction, an effective contact area of the tab connected to the current collector can be increased to enhance the overcurrent capability, thereby improving the performance of the battery cell.

According to one embodiment of the present disclosure, a battery including the battery cell according to the above embodiments is provided.

In some embodiments, at least two battery cells are provided. The battery further includes a busbar. The busbar has a first end connected to the first electrode lead-out portion of one of the at least two battery cells and a second end connected to the second electrode lead-out portion of another one of the at least two battery cells.

In these embodiments, electrical connection of a plurality of battery cells can be easily realized.

In some embodiments, the housing includes an accommodation portion having an opening and an end cover assembly covering the opening. The end cover assembly includes an end cover body and the first electrode lead-out portion. The first electrode lead-out portion is arranged at the end cover body in an insulation manner. The second end of the busbar is connected to the end cover body.

In these embodiments, the electrical connection of the plurality of battery cells can be can be easily realized, allowing for a more compact layout of the plurality of battery cells. In addition, a width of the busbar can be increased, thereby improving the overcurrent capability.

According to one embodiment of the present disclosure, an electric device is provided. The electric device includes the battery cell according to the above embodiments and/or the battery according to the above embodiments. The battery cell or the battery is configured to supply electric energy to the electric device.

According to one embodiment of the present disclosure, a method for manufacturing a battery cell is provided. The method includes: a step of providing a housing including providing a housing, the housing being provided with a first electrode lead-out portion and a second electrode lead-out portion that have opposite polarities; a step of assembling an electrode including providing an electrode assembly and arranging the electrode assembly in the housing, the electrode assembly including an electrode body, and a first tab and a second tab that extend from one side of the electrode body; and a step of performing an electrical connection including arranging a current collector assembly including a first current collector and a second current collector at a side of the electrode body close to the first tab and the second tab, electrically connecting the first tab and the first electrode lead-out portion to each other by the first current collector, and electrically connecting the second tab and the second electrode to each other by the second current collector.

In some embodiments, the housing includes an accommodation portion having an opening and an end cover assembly closing the opening. The end cover assembly includes an end cover body and the first electrode lead-out portion. The first electrode lead-out portion is arranged at the end cover body in an insulation manner, and the end cover assembly serves as the second electrode lead-out portion. The step of performing the electrical connection includes: welding the first tab and the second tab to first current collector and the second current collector, respectively; electrically connecting the second current collector to the end cover body; closing the opening by the end cover body; and welding the first current collector to the first electrode lead-out portion outside the end cover assembly.

In some embodiments, the accommodation portion has a side wall and electrically connected to the end cover body. The step of electrically connecting the second current collector to the end cover body includes: electrically connecting the second current collector to the sidewall, and electrically connecting the sidewall to the end cover body.

In some embodiments, the second current collector is welded to the side wall inside the accommodation portion.

In some embodiments, the second current collector includes a third portion electrically connected to the second tab and a fourth portion at least connected to an edge of the third portion close to the accommodation portion. The fourth portion is electrically connected to the side wall. The manufacturing method further includes positioning the fourth portion and the third portion relative to each other by an obtuse angle before placing the current collector assembly into the accommodation portion.

### BRIEF DESCRIPTION OF THE DRAWINGS

In order to clearly explain technical solutions of embodiments of the present disclosure, drawings used in the description of the embodiments or the related art are briefly described below. The drawings as described below are merely some embodiments of the present disclosure. Based on these drawings, other drawings can be obtained by those skilled in the art without creative effort.
FIG. 1 is a schematic structural view of mounting a battery at a vehicle according to some embodiments of the present disclosure.
FIG. 2 is an exploded view of a battery according to a first embodiment of the present disclosure.
FIG. 3 is an outline view of a battery cell according to some embodiments of the present disclosure.
FIG. 4 is an exploded view of a battery according to a first embodiment of the present disclosure.
FIG. 5 is a sectional view of a battery according to a first embodiment of the present disclosure.
FIG. 6 is a schematic structural view of an end cover assembly shown in FIG. 5 according to some embodiments.
FIG. 7 and FIG. 8 are enlarged views of part A and part B shown in FIG. 5, respectively.
FIG. 9 is a schematic view of a current collector assembly shown in FIG. 4 according to some embodiments.
FIG. 10 is an exploded view of the current collector assembly shown in FIG. 9.
FIG. 11A and FIG. 11B are a front view and a sectional view of the current collector assembly taken along line C-C shown in FIG. 4, respectively.
FIG. 12A and FIG. 12B are a front view and a sectional view of a first current collector taken along line D-D shown in FIG. 4, respectively.
FIG. 13A and FIG. 13B are a front view and a sectional view of a second current collector taken along line E-E shown in FIG. 4, respectively.
FIG. 14 is a sectional view of the current collector assembly shown in FIG. 4 in a cross section.
FIG. 15 is an exploded view of a battery cell according to a second embodiment of the present disclosure.
FIG. 16 is a schematic structural view of a current collector assembly shown in FIG. 15 according to some embodiments.
FIG. 17 is a sectional view taken along line F-F shown in FIG. 16.
FIG. 18 is a sectional view of a battery cell according to a second embodiment of the present disclosure.
FIG. 19 is an enlarged view of part G shown in FIG. 18.
FIG. 20 is a sectional view of a first insulation member shown in FIG. 15.
FIG. 21 is a schematic structural view of an electrical connection between a plurality of battery cells in a battery according to some embodiments.

In the accompanying drawings, the accompanying drawings are not drawn to scale.

Reference numerals are as follows:
100, battery cell; 10, housing;
1, accommodation portion; 11, side wall; 111, opening; 12, end wall;
2, end cover assembly; 21, end cover body; 211, second through hole; 212, bent portion; 22, first electrode lead-out portion; 221, first section; 222, second section; 223, third section; 224, first groove; 225, second groove; 226, third groove; 227, liquid injection hole; 23, first insulation member; 231, fourth groove; 232, fifth groove; 233, annular portion; 234, first extension portion; 235, second extension portion; 24, seal; 25, second insulation member; 26, sealing cover;
3, electrode assembly; 31, electrode body; 311, central hole; 32, first tab; 33, second tab;
4, current collector assembly; 41, insulation base; 411, first insulation portion; 412, second insulation portion; 412', third through hole; 413, first opening; 414, second opening; 415, second groove; 416, limit post; 42, first current collector; 421, first portion; 422, second portion; 422', fourth through hole; 422A, first circular arc-shaped section; 422B, second circular arc-shaped section; 422C, straight wall section; 423, protrusion; 424, first through hole; 425, first notch; 426, connection portion; 43, second current collector; 431, third portion; 432, fourth portion; 433, second notch;
5, spacer; 6, insulation sheet;
200, battery; 201, casing assembly; 201A, main body portion; 201B, first cover; 201C, second cover; 202, busbar;
300, vehicle; 301, axle; 302, wheel; 303, motor; 304, controller.

### DETAILED DESCRIPTION

Embodiments of the present disclosure are described in further detail below in connection with accompanying drawings and embodiments. Detailed descriptions of the following embodiments and the accompanying drawings are used to exemplarily explain principles of the present disclosure, but cannot be used to limit a scope of the present disclosure, i.e., the present disclosure is not limited to the depicted embodiments.

In the description of the embodiments of the present disclosure, the term "plurality" refers to more than two (including two). Similarly, "plurality of groups" refers to more than two groups (including two groups), and "plurality of pieces" refers to more than two pieces (including two pieces).

The present disclosure utilizes descriptions such as "over", "below", "top", "bottom", "front", "rear", "inner", and "outer" to indicate an orientation or positional relationship. It is only for the convenience of describing the embodiments of the present disclosure, rather than indicating or implying that the pointed device must have a specific orientation, or be constructed and operated in a specific orientation, and therefore cannot be understood as a limitation of the protection scope of the present disclosure.

In addition, terms such as "first" and "second" are used herein for purposes of description and are not intended to indicate or imply relative importance. The term "perpendicular" is not strictly perpendicular, but in tolerance. The term "parallel" is not strictly parallel, but is in tolerance. Orientation words appearing in the following descriptions are orientations shown in the drawings and are not intended to limit a specific structure of the present disclosure.

Reference throughout the specification of the present disclosure to "an embodiment" means that a particular feature, structure, or characteristic described in conjunction with the embodiment is included in at least some of the embodiments of the present disclosure. The occurrence of the phrase at various positions in the specification does not necessarily all refer to the same embodiment, nor a separate or alternative embodiment that is mutually exclusive with other embodiments. It is understood by those skilled in the art, both explicitly and implicitly, that the embodiments described herein may be combined with other embodiments.

Battery cells may include a lithium ion secondary battery, a lithium ion primary battery, a lithium sulfur battery, a sodium lithium ion battery, a sodium ion battery, a magnesium ion battery, or the like, which is not limited in the embodiments of the present disclosure. The battery cell may be cylindrical, flat, cuboid, or other shapes, which is not limited in the embodiments of the present disclosure. The battery cells are generally classified into three types based on packaging manner and include cylindrical battery cells, square battery cells, and soft-pack battery cells, which is not limited in the embodiments of the present disclosure.

Currently, the current battery cell usually includes a housing and an electrode assembly accommodated in the housing. The housing is filled with electrolyte. The electrode assembly is mainly formed by stacking or winding a first electrode plate and a second electrode plate that have opposite polarities, and an insulation member such as a separator is usually provided between the first electrode plate and the second electrode plate. Parts of the first electrode plate and the second electrode plate coated with an active material are formed as a main body portion of the electrode assembly. Parts of the first electrode plate and the second electrode plate without the active material are formed as a first tab and a second tab, respectively. In the lithium ion battery, the first electrode plate may be a positive electrode plate including a positive current collector and positive active material layers arranged at two sides of the positive current collector. The positive current collector may be may be made of aluminum. For example, the positive active material may be lithium cobaltite, lithium iron phosphate, ternary lithium, lithium permanganate, or the like. The second electrode plate may be a negative plate including a negative current collector and negative active material layers arranged at two sides of the negative current collector. The negative current collector may be made of copper, and the negative active material may be graphite or silicon. In another exemplary embodiment of the present disclosure, the first electrode plate may also be a negative electrode plate, and correspondingly the second electrode plate may be a positive electrode plate. The first tab and the second tab can be located at one or two ends of the main body portion. During charging and discharging of the battery cell, the positive active material and the negative active material react with the electrolyte, and the tabs are connected to terminals to form a current circuit.

It was found through research that the current battery cell is usually provided with a first electrode lead-out portion and a second electrode lead-out portion that have opposite polarities, to connect an electric circuit for power supply. The first tab is electrically connected to first electrode lead-out portion, and the second tab is electrically connected to the second electrode lead-out portion. For example, for a cylindrical battery cell, since the battery cell has a small end area, the first electrode lead-out portion and the second electrode lead-out portion are respectively arranged at two ends of the battery cell. Accordingly, the first tab and the second tab respectively extend from two ends of the electrode assembly. In practice, it was found that the tabs and electrode terminals at each end occupy a predetermined space for electrical connection, which requires more space to be occupied in a height direction of the battery cell, resulting in an increase in an overall volume of the battery cell and affecting an overall energy density of the battery cell.

To solve the above problems, the inventor intends to optimize an internal structure of the battery cell, and mainly improve a tab lead-out manner to reduce the height of the battery cell, thereby increasing the energy density.

Based on such an improved idea, embodiments of the present disclosure provide a battery cell. The battery cell includes a housing, an electrode assembly, and a current collector assembly. The housing is provided with a first electrode lead-out portion and a second electrode lead-out portion that have opposite polarities. The electrode assembly is arranged in the housing, and the electrode assembly includes an electrode body, and a first tab and a second tab that extend from one side of the electrode body. The current collector assembly is arranged at a side of the electrode body close to the first tab and the second tab, and the current collector assembly includes a first current collector and a second current collector. The first tab and the first electrode lead-out portion are electrically connected to each other by the first current collector, and the second tab and the second electrode lead-out portion are electrically connected to each other by the second current collector.

For this battery cell in which the first tab and the second tab extend from one side of the electrode body, the first tab and the second tab extend from one end of the electrode body. Thus, a space for an electrical connection is reserved at only one end of the electrode assembly, and and there is no need for two ends of the battery cell to be provided with electrode lead-out portions. In this way, an overall energy density of the battery cell can be effectively improved, and a volume of the battery cell can be reduced when a capacity of the battery cell is constant. Therefore, the battery can be more easily mounted in an electric device with a limited height space, or when a volume of the battery cell is constant, the capacity of the battery cell can be improved, and an endurance capacity of a battery is expanded.

The battery cell according to the embodiments of the present disclosure is applicable to the battery and an electric device using the battery cell. The battery is also applicable to the electric device.

The battery of the embodiments of the present disclosure is applicable to the electric device. The electric device can be a battery car, an electric car, a ship or a spacecraft, etc. For example, a spacecraft includes an airplane, a rocket, a space shuttle, a spacecraft, etc.

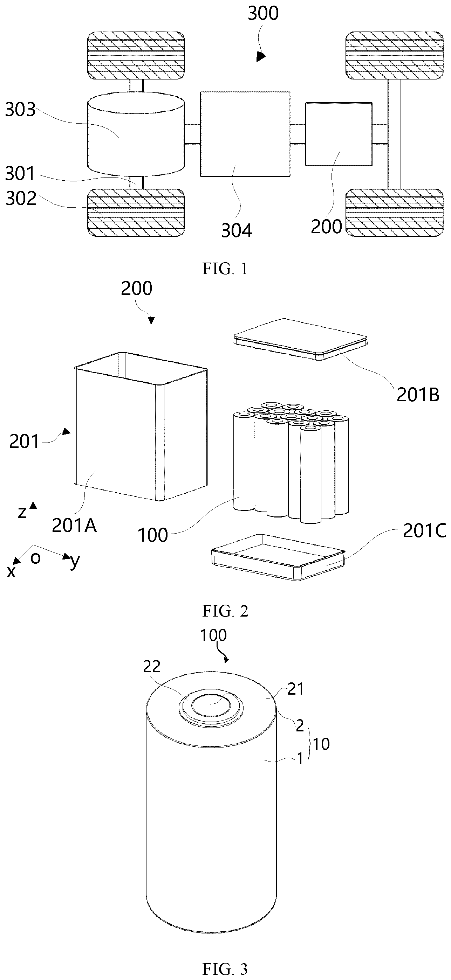

As shown in FIG. 1, the electric device may be a vehicle 300, such as a new energy vehicle, which may be a pure electric vehicle, a hybrid vehicle, or an extended-range vehicle. In other exemplary embodiments, the electric device may also be an unmanned aerial vehicle or a ship. In an exemplary embodiment of the present disclosure, the vehicle 300 may include an axle 301, a wheel 302 connected to the axle 301, a motor 303, a controller 304, and a battery 200. The motor 303 is configured to drive the axle 301 to rotate, and the controller 304 is configured to control the motor 303 to operate. The battery 200 may be arranged at a bottom, head, or tail of the vehicle 300 and configured to provide electrical energy for the motor 303 and other components in the vehicle to operate.

As shown in FIG. 2, the battery 200 includes a casing assembly 201 and a battery cell 100. The battery 200 may include one or more battery cells. When the battery 200 includes a plurality of battery cells 100, the plurality of battery cells 100 may be connected in series, in parallel, or in parallel and in series. The parallel and series connection means that the plurality of battery cells 100 are connected in series and in parallel. It is also possible that the plurality of battery cells 100 may be connected in series, in parallel, or in parallel and in series to form a battery module, and a plurality of battery modules is connected in series, in parallel, or in parallel and in series to form an entire structure accommodated in the casing assembly 201. In addition, all the battery cells 100 are directly connected together in series, in parallel, or in parallel and in series, and then the entire structure formed by all the battery cells 100 is accommodated in the casing assembly 201.

The casing assembly 201 may be a part of a battery pack. The casing assembly 201 may be removably mounted at the electric device, or the casing assembly 201 may be a space formed by structural members in the electric device and configured to accommodate the battery cell 100. For example, when the battery cell 100 is used in the vehicle 300, the casing assembly 201 is a space formed by a vehicle frame and configured to accommodate the battery cell 100.

The casing assembly 201 is internally hollow, and is configured to accommodate one or more battery cells 100. The casing assembly 201 may also have different shapes and size based on a shape, the number, combination mode and other requirements of the battery cells 100 to be accommodated. For example, the casing assembly 201 may include a main body portion 201A, a first cover 201B, and a second cover 201C. Each of two opposite ends of the main body portion 201A has an opening. The first cover 201B and the second cover 201C are configured to close the openings at the two ends of the main body portion 201A. In FIG. 2, based on an arrangement mode of the plurality of battery cells 100, the main body portion 201A has a rectangular hollow structure.

FIG. 3 is a schematic view of an outline of a battery cell 100 according to some embodiments. The battery cell 100 includes a housing 10. The housing 10 may include an accommodation portion 1 and an end cover assembly 2. The accommodation portion 1 has an opening, and the end cover assembly 2 covers the opening. The housing 10 is formed by connecting the end cover assembly 2 to the accommodation portion 1. The end cover assembly 2 includes an end cover body 21 and a first electrode lead-out portion 22. The first electrode lead-out portion 22 is provided at the end cover body 21. FIG. 3 shows a cylindrical battery cell 100, and the following embodiments are also mainly described by taking the cylindrical battery cell 100 as an example. In other embodiments of the present disclosure, the battery cell 100 of the present disclosure may also be a flat solid, a cuboid, or other shapes.

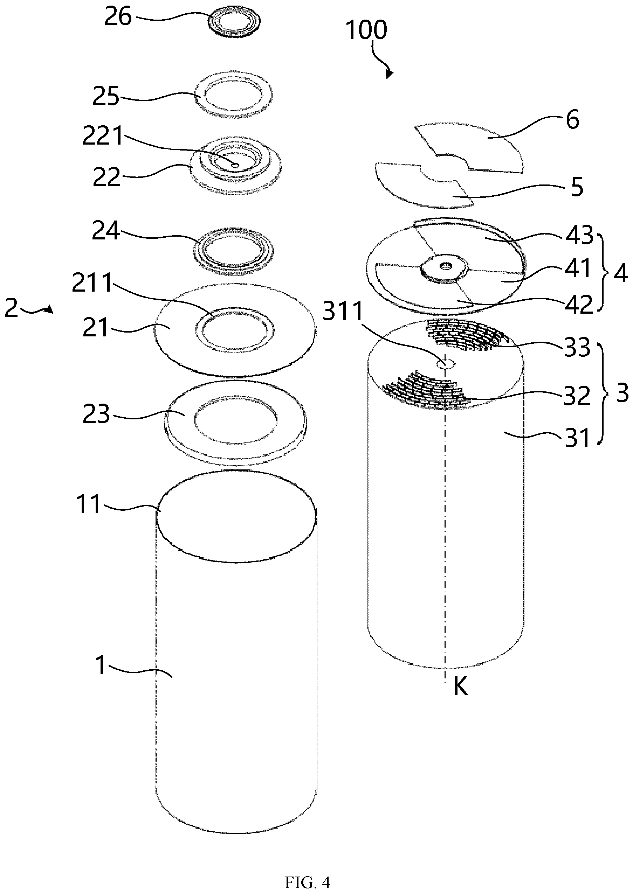

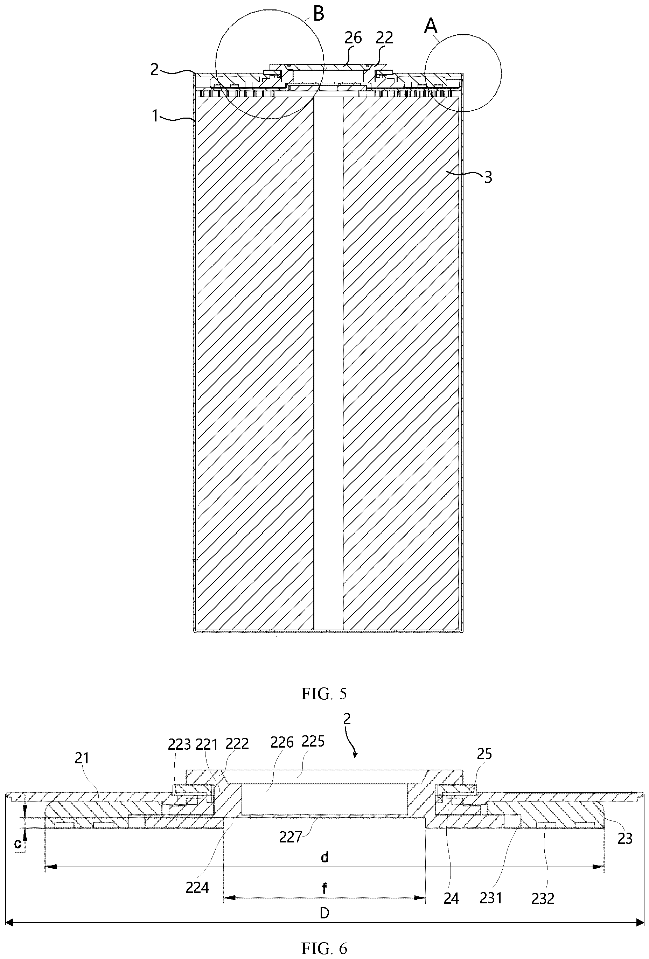

FIG. 4 is an exploded view of the battery cell 100 according to a first embodiment, and FIG. 5 is a longitudinal sectional view of the battery cell 100. In some embodiments, the battery cell 100 includes a housing 10, an electrode assembly 3, and a current collector assembly 4. The housing 10 is provided with a first electrode lead-out portion 22 and a second electrode lead-out portion that have opposite polarities. The electrode assembly 3 is arranged in the housing 10. The electrode assembly 3 includes an electrode body 31, and a first tab 32 and a second tab 33 that extend from one side of the electrode body 31. The current collector assembly 4 is arranged at a side of the electrode body 31 close to the first tab 32 and the second tab 33. The current collector assembly 4 includes a first current collector 42 and a second current collector 43. The first tab 32 and the first electrode lead-out portion 22 are electrically connected to each other by the first current collector 42, and the second tab 33 and the second electrode lead-out portion being electrically connected to each other by the second current collector 43.

In addition, the housing 10 has a hollow structure for accommodating the electrode assembly 3. The housing 10 is filled with an electrolyte. The first electrode lead-out portion 22 and the second electrode lead-out portion are used for inputting or outputting electric energy. The first tab 32 is electrically connected to the first electrode lead-out portion 22 by the first current collector 42, and the second tab 33 is electrically connected to the second electrode lead-out portion by the second current collector 43.

In another exemplary embodiment of the present disclosure, both the first electrode lead-out portion 22 and the second electrode lead-out portion may be electrode terminals. The electrode terminal may be designed as a pole, and the pole may be of a cylindrical shape, a square column structure, or a column structure with other shapes. Both the first electrode lead-out portion 22 and the second electrode lead-out portion are insulated from the housing 10. For example, the first electrode lead-out portion 22 is a positive terminal and the second electrode lead-out portion is a negative terminal, or the first electrode lead-out portion 22 is a negative terminal and the second electrode lead-out portion is a positive terminal. For example, the first electrode lead-out portion 22 and/or the second electrode lead-out portion at least partially protrude from an outer wall of the housing 10 to facilitate electrical connections between different battery cells 100 through a busbar.

In another exemplary embodiment of the present disclosure, the first electrode lead-out portion 22 is the electrode terminal, and the second electrode lead-out portion is the end cover body 21 of the housing 10. A second through hole 211 may be formed at the end cover body 21, and the electrode terminal is mounted at the second through hole 211. In another exemplary embodiment of the present disclosure, the first electrode lead-out portion 22 is configured to introduce positive electrical energy of the electrode assembly 3, and the second electrode lead-out portion 23 is configured to introduce negative electrical energy of the electrode assembly 3. In another embodiment of the present disclosure, the first electrode lead-out portion 22 is configured to introduce negative electrical energy of the electrode assembly 3, and the second electrode lead-out portion 23 is configured to introduce positive electrical energy of the electrode assembly 3.

The electrode assembly 3 includes a first electrode plate and a second electrode plate that have opposite polarities. The first electrode plate and the second electrode plate may be wound around a winding axis K. For a cylindrical battery cell 100, the electrode assembly 3 is of a cylindrical shape. For a square battery cell 100, the electrode assembly 3 is of a flat shape. The first tab 32 and the second tab 33 are located at one end of the electrode assembly 3 along the winding axis K, and are arranged close to electrode terminals in the first electrode lead-out portion 22 and the second electrode lead-out portion. In other embodiments of the present disclosure, the first tab 32 is a positive tab and the second tab 33 is a negative tab, or the first tab 32 is a negative tab and the second tab 33 is a positive tab.

The current collector assembly 4 is arranged between the tabs and a wall of the housing 10 facing towards the tabs to electrically connect the tab and the electrode lead-out portion that have a same polarity. The first current collector 42 and the second current collector 43 may be made of a conductive material such as a metal material. The positive current collector may be made of an aluminum material, and the negative current collector may be made of a copper material. The current collector and its corresponding tab may be made of the same material to facilitate welding, thereby reducing welding cracks.

In these embodiments, the first tab 32 and the second tab 33 extend from one end of the electrode body 31. Thus, a space for an electrical connection is needed to be reserved only at one end of the electrode assembly 3, and there is no need for two ends of the battery cell 100 to be provided with electrode lead-out portions. In this way, an overall energy density of the battery cell 100 can be effectively improved. In addition, a volume of the battery cell 100 can be reduced when a capacity of the battery cell 100 is constant. As a result, the battery 200 can be easily mounted at an electric device with a limited height space, or when the battery cell 100 has a constant volume, the capacity of the battery cell can be improved and an endurance capacity of the battery 200 is expanded.

In some embodiments, the first current collector 42 at least partially abuts with a surface of the first tab 32 facing away from the electrode body 31. The second current collector 43 at least partially abuts with a surface of the second tab 33 facing away from the electrode body 31.

In this case, the surface of the first tab 32 facing away from the electrode body 31 is formed by outer ends of a plurality of layers of first tab portions. In order to improve electrical connection reliability between the first current collector 42 and the first tab 32, the outer end of the first tab 32 may be flattened to increase a contact area. The surface of the second tab 33 facing away from the electrode body 31 is formed by outer ends of a plurality of layers of second tab portions. In order to improve electrical connection reliability between the second current collector 43 and the second tab 33, the outer end of the second tab 33 may be flattened to increase a contact area.

In the present embodiment, the first current collector 42 can be easily electrically connected to the first tab portion in each layer of the first tab, and the second current collector 43 can be easily electrically connected to the second tab portion in each layer of the second tab 33. Therefore, reliability of an electrical connection between the current collector and the corresponding tab can be improved, and an overcurrent capability can be enhanced.

In some embodiments, as shown in FIG. 4 and FIG. 5, the housing 10 includes an accommodation portion 1 and an end cover assembly 2. The accommodation portion 1 has an opening111, and the end cover assembly 2 covers the opening 111. The end cover assembly 2 includes an end cover body 21 and the first electrode lead-out portion 22 arranged at the end cover body 21 in an insulation manner. The end cover assembly 2 serves as the second electrode lead-out portion. The second current collector 43 is electrically connected to the end cover body 21.

In these embodiments, the end cover body 21 has a second through hole 211, and the first electrode lead-out portion 22 is arranged in the second through hole 211. The first electrode lead-out portion 22 may be arranged at a central region of the end cover body 21, or may be offset from the center of the end cover body 21. In order to insulate the first electrode lead-out portion 22 from the end cover body 21, the end cover assembly 2 further includes a seal 24 and a second insulation member 25. The seal 24 and the second insulation member 25 together surrounds an inner wall of the second through hole 211 and a part of the end cover body 21 adjoining to the second through hole 211.

For example, the seal 24 may be made of a rubber material, and the second insulation member 25 may be made of a plastic material.

For example, the seal 24 and the second insulation member 25 are annular and both have an L-shaped cross-section. As shown in FIG. 6, a horizontal part of the seal 24 is attached to the inner wall of the end cover body 21, and a vertical part of the seal 24 extends into the second through hole 211 and is attached to a side wall of the second through hole 211. A horizontal part of the second insulation member 25 is attached to an outer wall of the end cover body 21, and a vertical part of the second insulation member 25 extends into the second through hole 211 and is attached to the side wall of the second through hole 211. The vertical parts of the seal 24 and the second insulation member 25 abut with each other. For example, both the seal 24 and the second insulation member 25 are annular.

The end cover body 21 is made of a metal material and serves as the second electrode lead-out portion, which can eliminate one electrode terminal. For example, an outer edge of the end cover body 21 can be fixed at the opening 111 of the accommodation portion 1 through welding. Since the first electrode lead-out portion 22 is insulated from the end cover body 21, an insulation between the first electrode lead-out portion 22 and the second electrode lead-out portion 21 is also realized. In another exemplary embodiment of the present disclosure, the first electrode lead-out portion 22 is a positive electrode, and the second electrode lead-out portion 22 is a negative electrode. Since the electrode terminal is generally made of an aluminum material, when the first current collector 42 corresponding to the electrode terminal is also made of the aluminum material, welding of the same material can be implemented. Thus, the electrode terminal does not need to be designed into a copper-aluminum combination structure, which can simplify a structure of the electrode terminal and lower costs. In another exemplary embodiment of the present disclosure, the first electrode lead-out portion 22 is a negative electrode, and the second electrode portion is a positive electrode.

In these embodiments, the first electrode lead-out portion 22 is the electrode terminal, and the second electrode lead-out portion is the end cover body 21. Thus, one electrode terminal can be eliminated, and the structure of the battery cell 100 can be simplified. Therefore, assembly difficulty can be reduced, and costs can be saved. Since only one electrode terminal is needed to be arranged at the end cover body 21, a cross sectional area of the electrode terminal is increased to improve the overcurrent capability. Further, more space for wiring or arranging temperature acquisition components and the like can be saved for the end cover body 21. Moreover, the accommodation portion 1 has a large surface area, which can improve the overcurrent capability and facilitate welding of the accommodation portion 1 to the second current collector 43. In addition, compared with the side wall 11 of the accommodation portion 1 serving as the second lead-out portion, the end cover body 21 serves as the second electrode lead-out portion, which can prevent a busbar from occupying a space between adjacent battery cells 100. As a result, a spacing between the adjacent battery cells 100 can be reduced. In this way, the plurality of battery cells 100 in the battery 200 has more compact layout, thereby improving the energy density of the battery 200.

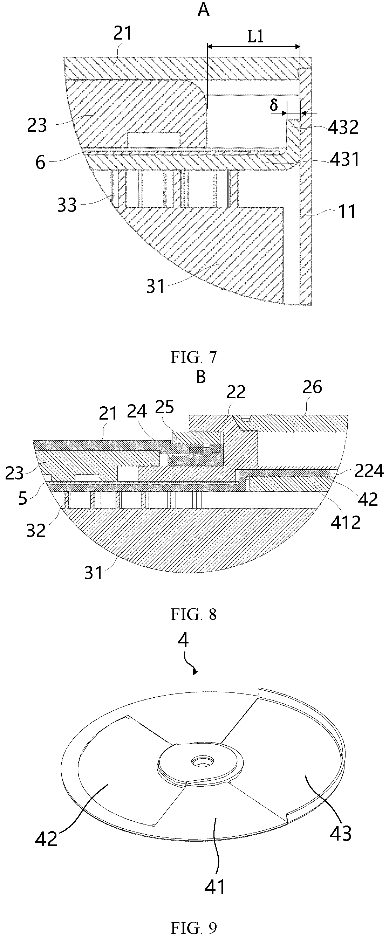

In some embodiments, as shown in FIG. 9, the current collecting assembly 4 further includes an insulation base 41. The first current collector 42 and the second current collector 43 are connected to the insulation base 41 and insulated from each other by the insulation base 41.

The insulation base 41, the first current collector 42, and the second current collector 43 are integrally formed. The insulation base 41 not only serves as a stationary base for the first current collector 42 and the second current collector 43, but also provide reliable insulation between the first current collector 42 and the second current collector 43. In another exemplary embodiment of the present disclosure, insulation base 41 may be made of an insulation material such as a plastic material.

In these embodiments, the current collector assembly 4 has an integral structure, which can simplify an electrical connection structure inside the battery cell 100, thereby further saving an internal space of the battery cell. In addition, a weight of the current collector assembly 4 can be reduced, and production costs of the components can be saved. The first current collector 42 and the second current collector 43 are carried by the insulation base 41. As a result, an overall rigidity can be improved, and deformation does not easily occur. Therefore, stable mounting can be provided, thereby improving electrical connection reliability. Moreover, since there is no need to separately mounting the first current collector 42, the second current collector 43, and the insulation base 41, this design can also lower the assembly difficulty. As a result, it is advantages for a battery cell 100 with a smaller cross section size, and assembly efficiency can be improved. In addition, the first current collector 42 and the second current collector 43 are insulated from each other through the insulation base 41 integrated with the first current collector 42 and the second current collector 43. Therefore, insulation reliability can be improved, and an influence of assembly error or vibration on insulation performance can be reduced, thereby improving reliability and safety of the battery cell 100 during its operation.

In some embodiments, the first current collector 42, the second current collector 43, and the insulation base 41 are integrally formed through injection molding.

For example, the insulation base 41 may be made of a plastic material, which is not limited to PE (polyethylene), LCP (liquid crystal polymer) and other materials with good thermoplasticity and insulativity. During the injection molding, the first current collector 42 and the second current collector 43 may be placed in an injection mold, and an injection molding liquid may be poured into the mold. The insulation base 41 may be formed after the liquid is solidified.

In these embodiments, integral formation through the injection molding can lower difficulty in processing and assembling the components in the current collector assembly 4, which can improve producing efficiency of the battery cell 100. In addition, a protruding structure and a recessed structure matching with each other can be easily arranged between the first current collector 42 and the second current collector 43 and the insulation base 41. In this way, bonding strength of the first current collector 42 and the second current collector 43 with the insulation base 41 can be increased, thereby increasing firmness of the first current collector 42 and the second current collector 43 arranged at the insulation base.

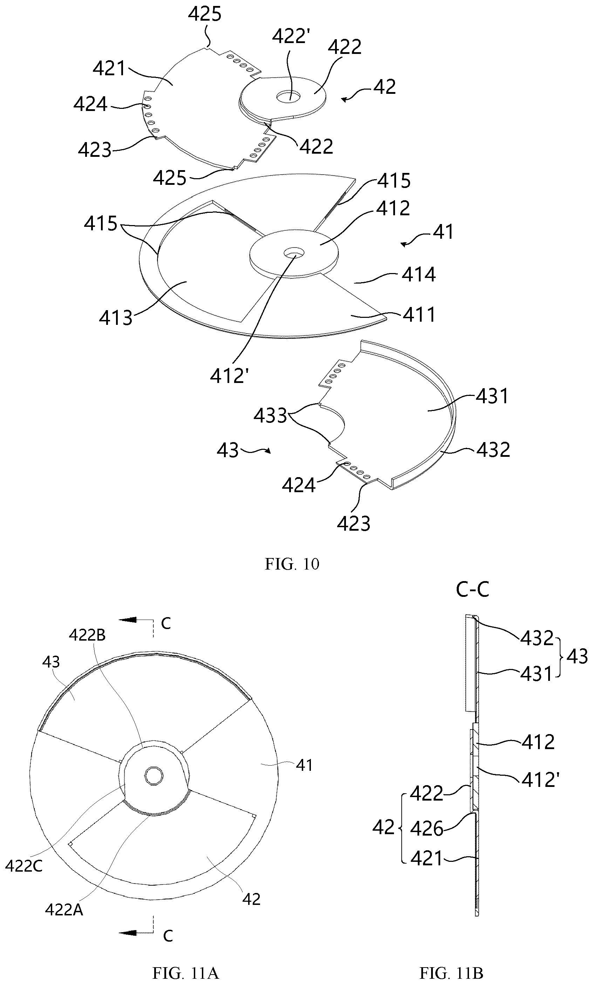

In some embodiments, as shown in FIG. 10, the insulation base 41 includes a first insulation portion 411. The first insulation portion 411 has a first opening 413 and a second opening 414. The first current collector 42 is at least partially accommodated in the first opening 413, and the second current collector 43 is at least partially accommodated in the second opening 414. The first insulation portion 411 is partially located between the first opening 413, and the second opening 414 and separates the first current collector 42 from the second current collector 43.

The first opening 413 and the second opening 414 extend through the insulation base 41.

In these embodiments, the first current collector 42 is at least partially accommodated in the first opening 413, and the second current collector 43 is at least partially accommodated in the second opening 414. In this way, the current collector can be better connected to the insulation base 41, realizing a reliable fixation. In addition, the dimension of the battery cell 100 in a height direction can be reduced, reducing a volume of the battery cell 100 and improving the energy density. Further, the first insulation portion 411 is partially located between the first opening 413 and the second opening 414, which can provide an insulation for the first current collector 42 and the second current collector 43, thereby improving insulation reliability.

In some embodiments, as shown in FIG. 10, an inner side wall of the first opening 413 has a second groove 415, and the first current collector 42 is provided with a protrusion 423 at an outer side wall of the first current collector 42 engaged with the first opening 413 and the protrusion 423 is embedded into the second groove 415 to join the first current collector 42 to the insulation base 41, and/or an inner side wall of the second opening 414 has a second groove 415, the second current collector 43 is provided with a protrusion 423 at an outer side wall of the second current collector 43 engaged with the second opening 414, and the protrusion 423 is embedded into the second groove 415 to join the second current collector 43 to the insulation base 41.

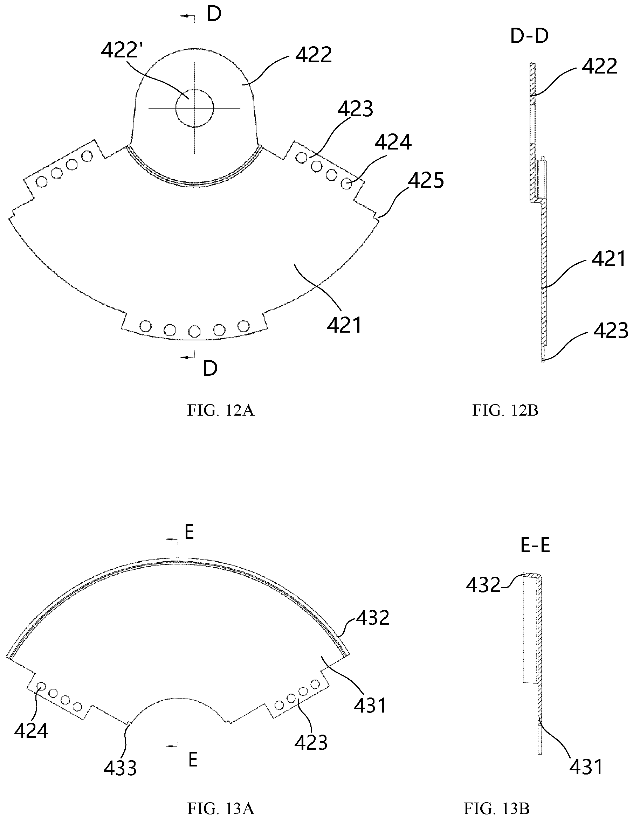

As shown in FIG. 11A, FIG. 11B, FIG. 12A, and FIG. 12B, a part of the first current collector 42 engaged with the first opening 413 is a first portion 421. The first portion 421 may have a sectorial structure. The protrusion 423 may be provided on at least one of an outer circular arc-shaped wall and the two side walls of the first portion 421, and a thickness of the protrusion 423 may be same as a thickness of the first portion 421. In another embodiment, considering that the insulation base 41 has a relatively thin thickness, in order to maintain strength of the insulation base 41 even after the second groove 415 is provided, the thickness of the protrusion 423 may be made smaller than the thickness of the first portion 421. The protrusion 423 arranged at the side wall of the first portion 421 may be rectangular, and a length of the protrusion 423 may be smaller than a length of the side wall. The protrusion 423 arranged at the outer arc wall of the first portion 421 may have a circular arc shape, and the length of the protrusion 423 may be smaller than a length of the outer circular arc wall. A shape and a size of the second groove 415 are adapted to the protrusion 423.

As shown in FIG. 13A and FIG. 13B, a part of the second current collector 43 engaged with the second opening 414 is a third portion 431, and the third portion 431 may have a sectorial structure. At least one of two side walls of the third portion 431 may be provided with the protrusion 423. The thickness of the protrusion 423 may be same as a thickness of the third portion 431. In another embodiment, considering that the insulation base 41 has a relatively thin thickness, in order to maintain the strength of the insulation base 41 even after the second groove 415 is provided, the thickness of the protrusion 423 may be made smaller than the thickness of the third portion 431.

In another exemplary embodiment of the present disclosure, the insulation base 41, the first current collector 42, and the second current collector 43 are formed through the injection molding, and the second groove 415 is formed naturally during the injection molding.

In these embodiments, by arranging the protrusion 423 at the current collector, when the insulation base 41, the first current collector 42, and the second current collector 43 are molded through injection molding, a bonding force between the current collector and the insulation base 41 can be increased. Therefore, a fixing of the first current collector 42 and the second current collector 43 to the insulation base 41 is firmer. Therefore, not only the electrical connection reliability can be improved, but also an insulation between the first current collector 42 and the second current collector 43 can also be ensured.

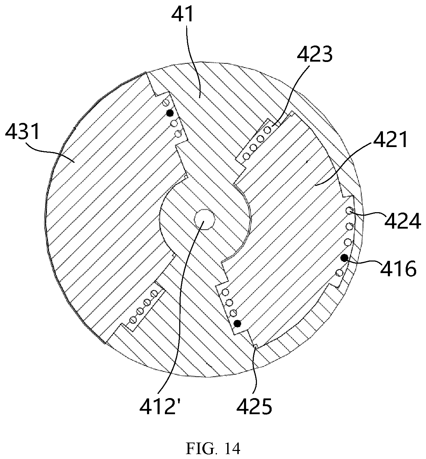

In some embodiments, as shown in FIG. 14, the protrusion 423 has a first through hole 424. The insulation base 41 is provided with a limit post 416 embedded into the first through hole 424.

In addition, a plurality of first through holes 424 may be provided. In another exemplary embodiment of the present disclosure, the insulation base 41, the first current collector 42, and the second current collector 43 are molded through the injection molding. During the injection molding process, the molding liquid flows into the first through hole 424 to form the limit post 416.

In these embodiments, by forming the first through hole 424 at the protrusion 423, when the insulation base 41, the first current collector 42, and the second current collector 43 are formed through injection molding, a bonding force between the current collector and the insulation base 41 can be further increased. Therefore, the fixing of the first current collector 42 and the second current collector 43 to the insulation base 41 is firmer.

In some embodiments, as shown in FIG. 7, the battery cell 100 further includes an insulation sheet 6 arranged between the second current collector 43 and the first electrode lead-out portion 22 to insulate the second current collector 43 from the first electrode lead-out portion 22.

In order to arrange the first electrode lead-out portion 22 in a region close to the center of the end cover body 21, a projection of the first electrode lead-out portion 22 on a cross-section of the accommodation portion would overlap with a projection of the second current collector 43 on the cross-section of the accommodation portion 1, which may easily cause a short circuit between the first electrode lead-out portion 22 and the second current collector 43. In order to improve insulation reliability, the insulation sheet 6 covers at least a region where the second current collector 43 directly faces towards the first electrode lead-out portion 22 to further improve insulation reliability. In order to further improve the insulation reliability, the insulation sheet 6 may cover an entire region where the second current collector 43 is connected to the second tab 33.

For example, the end surface of the second tab 33 is of a sectorial shape, a part of the second current collector 43 electrically connected to the second tab 33 is of a sectorial shape and covers the entire second tab 33. Correspondingly, the insulation sheet 6 is of a sectorial shape and covers the entire region where the second current collector 43 is connected to the second tab 33.

For example, the insulation sheet 6 may be made of an insulation material such as PET.

In this embodiment, the second current collector 43 and the first electrode lead-out portion 22 that have opposite polarities are spaced apart from each other by the insulation sheet 6. In this way, insulation performance can be ensured, and thus the short circuit can be avoided, thereby improving the reliability and safety of battery cell 100 during its operation.

In some embodiments, as shown in FIG. 8, the battery cell 100 further includes a spacer 5 arranged between the first current collector 42 and the first electrode lead-out portion 22. A surface of the spacer 5 facing towards the end cover assembly 2 and a surface of the insulation sheet 6 facing towards the end cover assembly 2 are flush with each other, and are flush with or higher than a surface of the first insulation portion 411.

In these embodiments, the spacer 5 and the insulation sheet 6 are flush with each other to form a support plane for supporting the end cover assembly 2. With this arrangement, the end cover assembly 2 and the current collector assembly 4 are in uniform contact with each other, to prevent an overhang between the end cover assembly 2 and the current collector assembly 4 at one side. In an exemplary embodiment of the present disclosure, the end cover assembly 2 further includes a first insulation member 23 arranged between the end cover body 21 and the current collector assembly 4. For example, the first insulation member 23 may be a plastic member. The spacer 5 and the insulation sheet 6 are used to support the first insulation member 23, allowing for the uniform contact between the first insulation member 23 and the current collector assembly 4.

In an exemplary embodiment of the present disclosure, the surface of the spacer 5 facing towards the end cover assembly 2 and the surface of the insulation sheet 6 facing towards the end cover assembly 2 are flush with the surface of the first insulation portion 411. A thickness of the spacer 5 is a difference between a thickness of the first insulation portion 411 and a thickness of the first current collector 42, and a thickness of the insulation sheet 6 is a difference between the thickness of the first insulation portion 411 and a thickness of the second current collector 43. In this way, the insulation base 41, the spacer 5, and the insulation sheet 6 can easily form an overall plane together to provide more stable support for the end cover assembly 2 without occupying additional height space.

In another exemplary embodiment of the present disclosure, the surface of the spacer 5 facing towards the end cover assembly 2 and the surface of the insulation sheet 6 facing towards the end cover assembly 2 are respectively higher than the surface of the first insulation portion 411. In this way, a thickness of the current collector can be easily increased, and thus the current collector cannot be easily burned during the welding. In addition, the overcurrent capability can be improved. Further, the corresponding current collector can be reliably covered, thereby reducing a size accuracy requirement of an outer edge of the current collector. In this structure, the spacer 5 and the insulation sheet 6 are in contact with the end cover assembly 2, and a gap is formed between the first insulation portion 411 and the end cover assembly 2.

In another exemplary embodiment of the present disclosure, the surface of the spacer 5 facing towards the end cover assembly 2 and the surface of the insulation sheet 6 facing towards the end cover assembly 2 are lower than the surface of first insulation portion 411. In this structure, the first insulation portion 411 is in contact with the end cover assembly 2, and a gap is formed between the end cover assembly 2 and the spacer 5 and the insulation sheet 6.

For example, an end surface of the first tab 32 is of a sectorial shape. The part of the first current collector 42 electrically connected to the first tab 32 is of a sectorial shape and covers the entire first tab 32. Correspondingly, the spacer 5 is of a sectorial shape and covers an entire region where the first current collector 42 is connected to the first tab 32. The spacer 5 and the insulation sheet 6 may be constructed into the same shape, thereby reducing a number of the components and improving assembly convenience.

The spacer 5 and the insulation sheet 6 may be made of a same material such as PET. In another exemplary embodiment of the present disclosure, the spacer 5 may also be made of a conductive material.

In these embodiments, by providing the space 5 and allowing the space 5 and the insulation sheet 6 to be flush with each other, the uniform contact between the end cover assembly 2 and the current collector assembly 4 can be achieved, which is beneficial to improve overall structural rigidity, and enables the current collector assembly 4 to be uniformly stressed. In this way, the current collector assembly 4 can be prevented from being displaced or deformed when being subjected to vibration or impact, which can ensure the electrical connection stability, thereby improving the reliability and safety of the battery cell 100 during its operation.

In some embodiments, as shown in FIG. 4, an edge of the first current collector 42 close to the accommodation portion 1 is surrounded by the insulation base 41.

Since a polarity of the first current collector 42 is different from a polarity of the accommodation portion 1, in order to avoid a short circuit between the first current collector 42 and the accommodation portion 1, the insulation base 41 is provided between the first current collector 42 and the side wall of the accommodation portion 1 to separate the first current collector 42 from the accommodation portion 1. For example, the battery cell 100 is of a cylindrical shape, and the end surface of the first tab 32 is of a sectorial shape. The part of the first current collector 42 connected to the first tab 32 is also of a sectorial shape, and an outer contour of the insulation base 41 is a circular arc-shaped section. A radius of the circular arc-shaped section of the insulation base 41 is greater than a radius of the circular arc-shaped section of the first current collector 42, to allow a radial outer edge of the first current collector 42 to be surrounded by the insulation base 41.

In these embodiments, by surrounding the edge of the first current collector 42 close to the accommodation portion 1 by the insulation base 41, a reliable insulation between the first current collector 42 and the accommodation portion 1 can be ensured. Even when the battery cell 100 is subjected to the vibration or the impact, the first current collector 42 and the accommodation portion 1 cannot be directly contact to each other. In this way, a short circuit between the first current collector 42 and the accommodation portion 1 that have different polarities can be avoided, thereby improving the reliability and safety of the battery cell 100 during its operation.

In some embodiments, as shown in FIG. 6 and FIG. 8, the end cover assembly 2 further includes a first insulation member 23 arranged between the end cover body 21 and the current collector assembly 4. An end surface of the first insulation member 23 closest to the electrode assembly 3 is flush with an end surface of the first electrode lead-out portion 22 closest to the electrode assembly 3.

The first insulation member 23 may be made of a plastic material. For the cylindrical battery cell 100, the first insulation member 23 has an annular structure. In an exemplary embodiment of the present disclosure, a fourth groove 231 is formed at the surface of the first insulation member 23 close to the current collector assembly 4. The third section 223 is located in the fourth groove 231, to allow an end surface of the first insulation member 23 facing towards the electrode assembly 3 to be flush with an end surface of the first electrode lead-out portion 22 facing towards the electrode assembly 3. The current collector assembly 4 can provide support for both the first insulation member 23 and the first electrode lead-out portion 22.

In another exemplary embodiment of the present disclosure, in a direction from the end cover body 21 to the electrode assembly 3, the end surface of the first insulation member 23 closest to the electrode assembly 3 extends beyond the end surface of the first electrode lead-out portion 22 closest to the electrode assembly 3. With this structure, a stable support for the first electrode lead-out portion 22 can be ensured, and the first electrode lead-out portion 22 is prevented from being disconnected from the first current collector 42 when being subject to vibration or impact, thereby improving the reliability of the electrical connection. In addition, a displacement of the first electrode lead-out portion 22 due to a protrusion of the first insulation member 23 can be avoided.

In these embodiments, through supporting both the first insulation member 23 and the first electrode lead-out portion 22 by the current collector assembly 4, stability of the overall structure can be improved. In this way, a position of the first electrode lead-out portion 22 can be kept stable, and a deformation amount of the current collector assembly 4 can be reduced, thereby improving reliability of the internal electrical connection of the battery cell 100.

In some embodiments, as shown in FIG. 9 and FIG. 10, the insulation base 41 includes a first insulation portion 411 and a second insulation portion 412 connected to the first insulation portion 411. The first insulation portion 411 has a first opening 413. The first current collector 42 includes a first portion 421 engaged with the first opening 413 and electrically connected to the first tab 32, and a second portion 422 connected to the first portion 421 and overlapping with the second insulation portion 412. The second portion 422 is electrically connected to the first electrode lead-out portion 22.

Taking the cylindrical battery cell 100 as an example, the first insulation portion 411 has a circular plate-like structure, and the first insulation portion 411 has the first opening 413 and the second opening 414. In some embodiments, the first tab 32 and the second tab 33 each are of a sectorial shape and opposite to each other. Correspondingly, the first opening 413 and the second opening 414 each are of a sectorial shape and opposite to each other. For example, the first opening 413 and the second opening 414 are symmetrically arranged with respect to a center of the first insulation portion 411. The sectorial opening has a circular arc-shaped inner wall at a position close to a center angle, and there is a predetermined distance between a circular arc-shaped outer wall of the first opening 413 and an outer edge of the first insulation portion 411. The second opening 414 extends through the outer edge of the first insulation portion 411. The second insulation portion 412 is arranged at a central region of the first insulation portion 411, and may has a disc-shaped structure. A circular arc-shaped inner wall of the first opening 413 and a circular arc-shaped inner wall of the second opening 414 are overlapped with an outer wall of the second insulation portion 412. In another exemplary embodiment of the present disclosure, the second insulation portion 412 may further be eccentrically arranged relative to the first insulation portion 411.

The first current collector 42 includes the first portion 421 and the second portion 422. The first portion 421 is arranged in the first opening 413 and electrically connected to the first tab 32 to collect current of the first tab 32. For example, the electrical connection can be implemented through welding or the like. The second portion 422 overlaps with the second insulation portion 412 at a side of the second portion 422 close to the first electrode lead-out portion 22. The second portion 422 is electrically connected to the first electrode lead-out portion 22, for example, through welding.

A third through hole 412' is formed at a center of the second insulation portion 412, and a fourth through hole 422' is formed at the second portion 422. A liquid injection hole 227 is formed at the first electrode lead-out portion 22, and an electrolyte injected through the liquid injection hole 227 can flow into the electrode assembly 3 through the fourth through hole 422' and the third through hole 412'.

In these embodiments, the first current collector 42 includes the first portion 421 and the second portion 422. In this way, the first tab 32 and the first electrode lead-out portion 22 can be connected to different parts of the first current collector 42, respectively. In this way, deformation and damage of the first current collector 42 caused by repeated welding can be avoided, and welding reliability can be improved. Moreover, the second portion 422 overlaps with the second insulation portion 412 to provide stable support for the second portion 422 and prevent the second portion 422 from being deformed. In addition, insulation between the first current collector 42 and the second tab 33 can be achieved by providing the second insulation portion 412, thereby improving insulation reliability and preventing the short circuit from occurring in the battery cell 100 during its operation.

In some embodiments, the first electrode lead-out portion 22 is arranged at a central region of the end cover body 21. The second insulation portion 412 is arranged at a central region of the first insulation portion 411.

In these embodiments, the first electrode lead-out portion 22 is arranged at the central region of the end cover body 21, which is beneficial to increasing a cross-sectional area of the first electrode lead-out portion 22. In this way, an electrical connection can be facilitated, and the overcurrent capability can be improved. In addition, it is convenient to connect the first electrode lead-out portion of one battery cell 100 to the second electrode lead-out portion 22 of an adjacent battery cell 100 by the busbar. Therefore, a width of the busbar can be increased, and the overcurrent capability can be improved.

In some embodiments, as shown in FIG. 10, FIG. 11A, and FIG. 11B, a projection of the first electrode lead-out portion 22 on a cross-section of the accommodation portion 1 overlaps with a projection of the second current collector 43 on the cross-section of the accommodation portion 1. The second insulation portion 42 protrudes towards the first electrode lead-out portion 22 relative to the first insulation portion 411. The second portion 422 protrudes towards the first electrode lead-out portion 22 relative to the first portion 421.

A surface of the second insulation portion 412 facing towards the electrode assembly 3 may be flush with the first insulation portion 411, and a surface of the second insulation portion 412 facing towards the first current collector 42 is higher than the first insulation portion 411. Correspondingly, the second portion 422 also protrudes towards the first electrode lead-out portion 22 relative to the first portion 421. For example, the first portion 421 and the second portion 422 may be stamped from an integral sheet structure.

The first current collector 42 may be formed through bending or stamping. The first current collector 42 may include a first portion 421, a second portion 422, and a connection portion 426. The connection portion 426 is connected between the first portion 421 and the second portion 422 to achieve a height difference between the first portion 421 and the second portion 422. In another exemplary embodiment of the present disclosure, the second portion 422 and the first portion 421 may also be formed into a flat plate structure.

In these embodiments, considering that in a case where the first electrode lead-out portion 22 and the second current collector 43 have an overlapping part, a distance between the second portion 422 and the second current collector 43 is relatively short to achieve an electrical connection between the second portion 422 and the first electrode lead-out portion 22, which enables that the short circuit is likely to occur. By allowing the second insulation portion 412 to protrude towards the first electrode lead-out portion 22 relative to the first insulation portion 411, the second portion 422 may be offset from a part of the second current collector 43 connected to the second tab 33 in a height direction, to prevent the short circuit from occurring between the second portion 422 and the second current collector 43, thereby improving the insulation reliability.

In some embodiments, as shown in FIG. 6, FIG. 8, and FIG. 10, the first electrode lead-out portion 22 has a first groove 224 formed at an inner end surface of the first electrode lead-out portion 22. The second portion 422 is at least partially located in the first groove 224.

In another exemplary embodiment of the present disclosure, the protrusion may be entirely located in the first groove 224. With this structure, not only a height of the battery cell 100 can be minimized, but also a stable support can be provided for the end cover assembly 2 by the current collector assembly 4. In another exemplary embodiment of the present disclosure, the protrusion may further be partially located in the first groove 224. A diameter f of the first groove 224 is greater than or equal to a maximum diameter of the second portion 422 to avoid interference.

In an exemplary embodiment of the present disclosure, as shown in FIG. 6, the end cover assembly 2 may include an end cover body 21, a first electrode lead-out portion 22, a first insulation member 23, a seal 24, and a second insulation member 25.

The first electrode lead-out portion 22 includes a first section 221, a second section 222, and a third section 223. The second section 222 and the third section 223 are connected to two ends of the first section 221, respectively. The second section 222 is arranged in the second through hole 211, and the second section 222 is located outside the end cover body 21. The second insulation member 25 may be arranged between the second section 222 and the end cover body 21. The third section 223 is located at an inner side of the end cover body 21, and the seal 24 may be arranged between the third section 223 and the end cover body 21. The seal 24 is located in the annular first insulation member 23. A diameter of the second section 222 and a diameter of the third section 223 are greater than a diameter of the first section 221. For example, the diameter of the third section 223 is greater than the diameter of the second section 222. In this way, the third section 223 can support the first insulation member 23 and the seal 24. A fourth groove 231 is arranged at a surface of the first insulation member 23 close to the current collector assembly 4, and the third section 223 is located in the fourth groove 231.

An inner surface of the first electrode lead-out portion 22 has the first groove 224, an outer surface of the first electrode lead-out portion 22 has the second groove 225. A bottom surface of the second groove 225 has a third groove 226. Therefore, a welding thickness of the first electrode lead-out portion 22 can be reduced, and the electrical connection reliability between the first electrode lead-out portion 22 and the first current collector 42 can be improved. A liquid injection hole 227 is formed at a bottom surface of the third groove 226 for the injection of the electrolyte.

In these embodiments, the first groove 224 is formed the inner end surface of the first electrode lead-out portion 22, and the second portion 422 is at least partially located in the first groove 224. Thus, an occupied height of the current collector assembly 4 can be reduced, thereby reducing a height of the battery cell 100. Moreover, this structure can provide support for both the first insulation member 23 and the first electrode lead-out portion 22 by the current collector assembly 4, thereby improving the stability of the overall structure. In addition, the position of the first electrode lead-out portion 22 can be kept stable, thereby improving the reliability of the internal electrical connection of the battery cell 100.

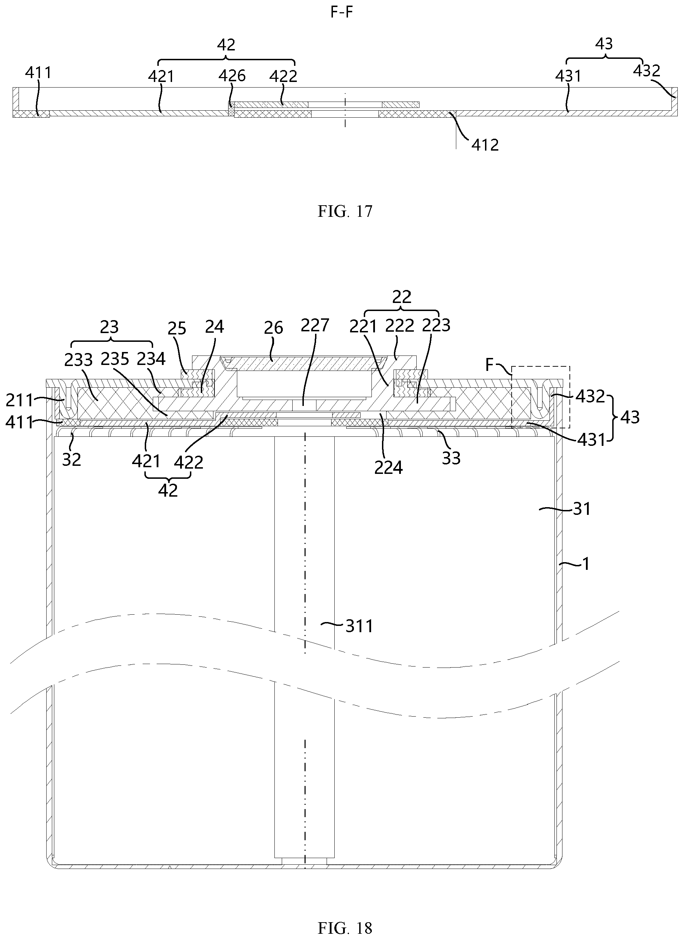

In some embodiments, as shown in FIG. 18, the end cover assembly 2 further includes a first insulation member 23. The first insulation member 23 is arranged between the end cover body 21 and the current collector assembly 4. The first insulation member 23 covers a region outside an inner end surface of the first electrode lead-out portion 22 in a radial direction thereof. The first groove 224 is formed by the first insulation member 23 and the inner end surface of the first electrode lead-out portion 22. The second portion 422 is at least partially located in the first groove 224.

The seal 24 and the second insulation member 25 each are of an annular shape with an L-shape cross section. A horizontal part of the seal24 is attached to the inner wall of the end cover body 21, and a vertical part extends into the second through hole 211 and attached to the side wall of the second through hole 211. A horizontal part of the second insulation member 25 is attached to the outer wall of the end cover body 21, and a vertical part extends into the second through hole 211 and attached to the side wall of the second through hole 211. The vertical part of the seal 24 and the vertical part of the second insulation member 25 are in contact with each other. For example, both the seal 24 and the second insulation member 25 are of annular shapes.

The first electrode lead-out portion 22 includes a first section 221, a second section 222, and a third section 223. The second section 222 and the third section 223 are connected to two ends of the first section 221, respectively. The first section 221 is arranged in the second through hole 211, and the second section 222 is located outside the end cover body 21. The second insulation member 25 is arranged between the second section 222 and the end cover body 21. The third section 223 is located at the inner side of the end cover body 21, and the seal 24 is located between the third section 223 and the end cover body 21 and is close to the first section 221.

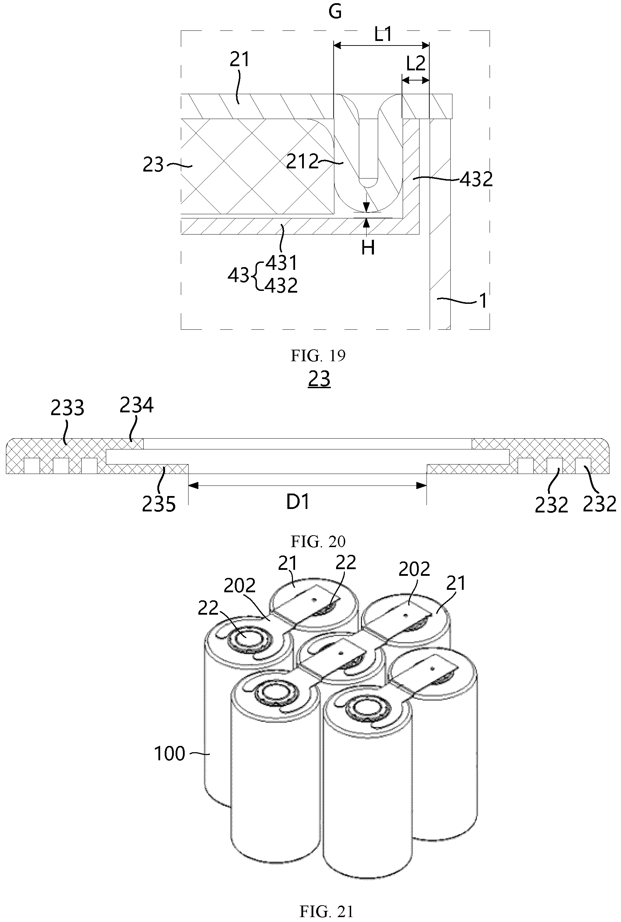

As shown in FIG. 20, the first insulation member 23 includes an annual portion 233, a first extension portion 234, and a second extension portion 235. The first extension portion 234 extends radially inwards from a top end of an inner side wall of the annual portion 233, and the second extension portion 235 extends radially inwards from a bottom end of the inner side wall of the annual portion 233. The third section 223 is located in a cavity formed by spacing the first extension portion 234 apart from the second extension portion 235 spaced. The first extension portion 234 covers a region outside a top surface of the third section 223 in a radial direction thereof and abuts with the seal 24. The second extension portion 235 covers a region outside a bottom surface of the third section 223 in a radial direction thereof.

In this structure, the first groove 224 is formed by the second extension portion 235 and the inner end surface of the first electrode lead-out portion 22. The second portion 422 is at least partially located in the first groove 224. A diameter of the first groove 224 is D1, and D1 is greater than a maximum outer diameter of the second portion 422.

In these embodiments, it is not necessary to machine the first groove 224 at the inner end surface of the first electrode lead-out portion 22. In this way, processing difficulty of the first electrode lead-out portion 22 can be lowered. In addition, the current collector assembly 4 only needs to provide support for the first insulation member 23, and there is no need to consider an alignment between the end surface of the first insulation member 23 closest to the electrode assembly 3 and the end surface of the first electrode lead-out portion 22 closest to the electrode assembly 3. Therefore, processing accuracy requirements of the components can be lowered.

In some embodiments, as shown in FIG. 6, the first groove 224 has a depth c equal to or smaller than a height by which the second portion 422 protrudes from the first portion 421. Thus, the second portion 422 is partially located in the first groove 224.

In these embodiments, even when there is a processing error on the first groove 224 or an error on the height by which the second portion 422 protrudes from the first portion 421, the second portion 422 can be in reliable contact with a groove bottom of the first groove 224. Thus, an assembly gap between the second portion 422 and the first electrode lead-out portion 22 can be avoided, thereby ensuring the reliability of the electrical connection between the first electrode lead-out portion 22 and the second portion 422.

In some embodiments, as shown in FIG. 11A and FIG. 11B, the second insulation portion 412 has a side wall located outside the first opening 413 and extending beyond an outer side wall of the second portion 422.

The second insulation portion 412 is in a disc shape. The second portion 422 has a first circular arc-shaped section 422A, a second circular arc-shaped section 422B, and two straight wall sections 422C. A projection of the first circular arc-shaped section 422A on the first portion 421 is coincident with a circular arc-shaped inner wall of the first portion 421. The second circular arc-shaped section 422B is opposite to the first circular arc-shaped section 422A. Two ends of the second circular arc-shaped section 422B are connected to two ends of the first circular arc-shaped section 422A by one straight wall section 422C, respectively. A diameter of the second insulation portion 412 is greater than a diameter of the second circular arc-shaped section 422B.

In these embodiments, the side wall of the second insulation portion 412 extends beyond the outer side wall of the second portion 422. In this way, the second portion 422 can be spaced apart from the second current collector 43. In addition, the second portion 422 can be prevented from being brought into contact with the second current collector 43. Therefore, the insulation reliability can be ensured, thereby improving the reliability and safety of the battery cell 100 during its operation.

In some embodiments, as shown in FIG. 12A and FIG. 12B, at least one corner of the first portion 421 facing away from the second portion 422 has a first notch 425 configured to be engaged with a first positioning portion in an injection mold to position the first current collector 42.

In a case where the first current collector 42 and the insulation base 41 are integrally formed through the injection molding, when the first current collector 42 is placed in the injection mold, in order to position the first current collector 42 to avoid a displacement of the first current collector 42, the corner of the first current collector 42 has the first notch 425. The first positioning portion is arranged at a bottom surface of the injection mold, and the first positioning portion is engaged with the first notch 425. After the insulation base 41 is cured after the injection molding, the current collector assembly 4 can be removed from the injection mold. In this way, a hole is formed at the first notch 425. In order to improve positioning reliability, two corners of the first portion 421 facing away from the second portion 422 each have the first notch 425. For example, the first notch 425 may be of a rectangular shape, an arc shape, or other shapes. Fox example, the first notch 425 is in a rectangular shape of 0.5 mm*0.6 mm.

In these embodiments, when the current collector assembly 4 is formed through the injection molding, the first current collector 42 can be positioned by the first notch 425 to improve a position accuracy of the first current collector 42. In addition, since a circumferential dimension of an inner edge of the first current collector 42 is small, and the inner edge is formed as a bottleneck region of the overcurrent area, by forming the first notch 425 at the corner of the first portion 421 facing away from the second portion 422, an overcurrent capacity of the first current collector 42 would not be affected.

In some embodiment, as shown in FIG. 13A and FIG. 13B, the insulation base 41 includes a first insulation portion 411. The first insulation portion 411 has a second opening 414. The second current collector 43 includes a third portion 431 engaged with the second opening 414 and electrically connected to the second tab 33, and a fourth portion 432 at least partially connected to an edge of the third portion 431 close to the accommodation portion 1. The fourth portion 432 is electrically connected to the end cover body 21.

Taking the cylindrical battery cell 100 as an example, the first insulation portion 411 has a circular plate-like structure, and the first opening 413 and the second opening 414 are formed at the first insulation portion 411. In some embodiments, the first tab 32 and the second tab 33 each are of a sectorial shape and opposite to each other. Correspondingly, the first opening 413 and the second opening 414 each are of a sectorial shape and opposite to each other. For example, the first opening 413 and the second opening 414 can be symmetrically arranged with respect to the center of the first insulation portion 411. The sectorial opening has the circular arc-shaped inner wall at a position close to the center angle. The second opening 414 extends through the outer edge of the first insulation portion 411. The circular arc-shaped inner wall of the second opening 414 is coincident with the outer wall of the second insulation portion412.

The second current collector 43 includes a third portion 431 and a fourth portion 432. The third portion 431 is arranged in the second opening 414, and is electrically connected to the second tab 33 to collect current of the second tab 33. The electrical connection can be realized through the welding or the like. The fourth portion 432 is bent towards the end cover body 21 or the electrode assembly 3 relative to the third portion 431. The fourth portion 432 is electrically connected to the side wall 11 of the accommodation portion 1 or the end cover body 21. The electrical connection can be achieved, for example, through welding or the like. A length section of the fourth portion 432 at least partially extends along the outer edge of the third portion 431 to form a circular arc-shaped structure.

For example, the third portion 431 and the fourth portion 432 may be formed by bending an integral thin plate structure. The third portion 431 and fourth portion 432 are equal to each other in thickness. In another exemplary embodiment of the present disclosure, the third portion 431 and the fourth portion 432 may also be designed to have structures of different thicknesses.

In these embodiments, the second current collector 43 can be easily machined, and after being integrated to the insulation base 41, the second current collector 43 can be conveniently electrically connected to the end cover body 21 by the fourth portion 432 directly or indirectly. Thus, the second tab 33 can be electrically connected to the end cover body 21 serving as the second electrode lead-out portion.

In some embodiments, at least one corner of the third portion 431 facing away from the fourth portion 432 has a second notch 433. The second notch 433 is configured to be engaged with a second positioning portion in an injection mold to position the second current collector 43.

In a case where the second current collector 43 and the insulation base 41 are integrally formed through the injection molding, when the second current collector 43 is placed in the injection mold, in order to position the second current collector 43 to avoid a displacement of the second current collector 43, the corner of the second current collector 43 has the second notch 433. The second positioning portion is arranged at a bottom surface of the injection mold, and engaged with the second notch 433. After the insulation base 41 is cured after the injection molding, the current collector assembly 4 can be removed from the injection mold. In this way, a hole is formed at the second notch 433. In order to improve positioning reliability, two corners of the third portion 431 facing away from the fourth portion 432 each has the second notch 433. For example, the second notch 433 may be of a rectangular shape, an arc shape, or other shapes. Fox example, the second notch 433 is in a rectangular shape of 0.5mm*0.6mm.

In these embodiments, when the current collector assembly 4 is formed through the injection molding, the second current collector 43 can be positioned by the second notch 433 to improve position accuracy of the second current collector 43. In addition, since the bent fourth portion 432 is arranged at an outer edge of the second current collector 43, by forming the second notch 433 at the corner of the third portion 431 facing away from the fourth portion 432, processing of the second notch 433 is facilitated, and the second current collector 43 can be easily positioned.

In some embodiments, as shown in FIG. 10, an extension length of the fourth portion 432 in a circumferential direction of the accommodation portion 1 does not extend beyond the edge of the third portion 431 close to the accommodation portion 1.

The extension length of the fourth portion 432 may be equal to a length of the edge of the third portion 431 close to the accommodation portion 1. With this structure, the outer edge of the thin plate structure can be directly bent to form the fourth portion 432. As a result, the processing is simple. On this basis, an electrical connection length can be increased to the maximum extent, thereby improving the electrical connection reliability and overcurrent capability. In another embodiment, the extension length of the fourth portion 432 may also be smaller than the length of the edge of the third portion 431 close to the accommodation portion 1. In another exemplary embodiment of the present disclosure, the fourth portion 432 may also be connected to the third portion 431 through the welding or the like.

In these embodiments, processing difficulty of the second current collector 43 can reduced, and the second current collector can be directly formed by bending the thin plate structure. Therefore, an overall structural strength of the second current collector 43 can be improved, and thus connection reliability between the third portion 431 and the fourth portion 432 can be enhanced.

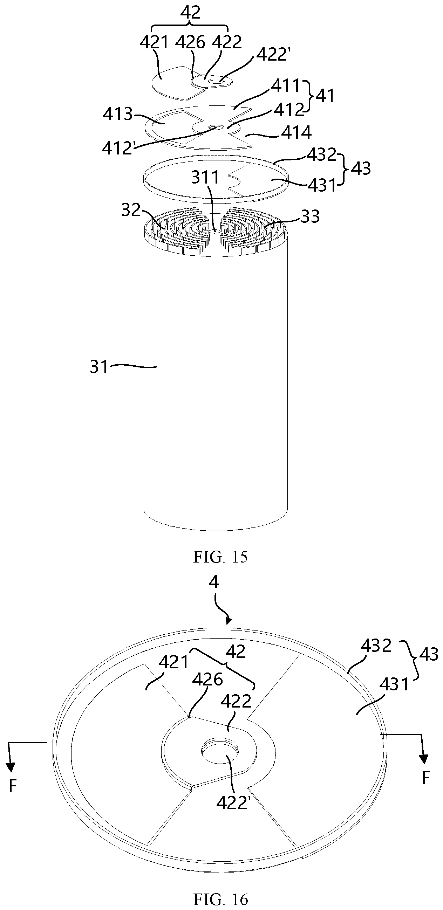

In some embodiments, as shown FIG. 15 to FIG. 17, the fourth portion 432 extends around the accommodation portion 1.

The third portion 431 and the fourth portion 432 may be connected to the edge of the third portion 431 close to the accommodation portion 1 through the welding. Remaining length sections of the fourth portion 432 may be connected to the insulation base 41 through the injection molding. The outer side wall of fourth portion 432 may not extend beyond the outer side wall of insulation base 41. As shown FIG. 15 to FIG. 17, the fourth portion 432 is electrically connected to the bent portion 212 of end cover body 21. In another exemplary embodiment of the present disclosure, the fourth portion 432 is connected to the side wall 11 of the accommodation portion 1.

In these embodiments, the fourth portion 4332 extends around the accommodation portion 1. In this way, a length of the direct or indirect electrical connection between the fourth portion 432 and the end cover body 21 can be increased, thereby improving the connection reliability and increasing the overcurrent capability.

In some embodiment, the fourth portion 432 is angled to the third portion 431.

The fourth portion 432 is bent towards the end cover body 21 or the electrode assembly 3 relative to the third portion 431. The fourth portion 432 is electrically connected to the side wall 11 of the accommodation portion 1 or the end cover body 21 through the welding for example. The angle between the fourth portion 432 and the third portion 431 may be an acute angle, a right angle, or an obtuse angle.

In these embodiments, the fourth portion 432 is angled to the third portion 431. In this way, the area of the electrical connection between the fourth portion 432 and the side wall 11 of the accommodation portion 1 or the end cover body 21 can be increased, facilitating the electrical connection through the welding. In addition, the electrical connection reliability can be improved.

In some embodiment, the fourth portion 432 extends towards the end cover assembly 2.

In these embodiments, the fourth portion 432 extends away from the electrode assembly 3. In this way, it is possible to prevent active materials from peeling off due to an insertion of the fourth portion 432 between electrode plates of the electrode assembly 3 when being subject to vibration or impact. Further, it is also possible to prevent the fourth portion 432 from being brought into contact with the electrode plates with opposite polarity to occur short circuit, thereby improving the insulation reliability. Moreover, the fourth portion 432 is closer to the opening 111 of the accommodation portion 1, and thus the fourth portion 432 can be easily welded to a side wall of the accommodation portion 1 through the opening 111, thereby improving a welding quality.

In some embodiment, as shown in FIG. 7, the end cover assembly 2 further includes a first insulation member 23. The first insulation member 23 is arranged between the end cover body 21 and the current collector assembly 4. A first gap L1 is at least formed in a region corresponding to the fourth portion 432 between the first insulation member 23 and the side wall 11, and the fourth portion 432 is located in the first gap L1.

A first gap L1 may only formed between a region of the first insulation member 23 corresponding to the fourth portion 432 and the accommodation portion 1 to allow the fourth portion 432 to extend into the first gap L1, or for convenience of processing and assembling, a constant first gap L1 may be formed between the first insulation member 23 and the accommodation portion 1 in the entire circumferential direction of the first insulation member 23. A predetermined spacing is formed between the fourth portion 432 and the end cover body 21 to allow the end cover assembly 2 to fit into place at the opening 111 of the accommodation portion 1.

In these embodiments, the fourth portion 432 is located in the first gap L1 between the first insulation member 23 and the accommodation portion 1, and thus can share a space with the first insulation member 23. An inner side of the fourth portion 432 is insulated by the first insulation member 23. In addition, it is alps possible to prevent the active materials from peeling off due to the insertion of the fourth portion 432 between the electrode plates of the electrode assembly 3 when being subject to the vibration or the impact. Further, it is also possible to prevent the fourth portion 432 from being brought into contact with the electrode plates of the opposite polarity to occur the short circuit, thereby improving the insulation reliability. Moreover, the fourth portion 432 is closer to the opening 111 of the accommodation portion 1, and thus the fourth portion 432 can be easily welded to the side wall 11 of the accommodation portion 1 through the opening 111. When the welding is used, the fourth portion 432 and the side wall 11 can be welded inside the accommodation portion 1, which can improve the welding quality, or the fourth portion 432 is convenient to be directly electrically connected to the end cover body 21.

In some embodiment, as shown in FIG. 6, the housing 10 is of a cylindrical shape. The first insulation member 23 is of a circular ring shape. The first insulation member 23 has an outer diameter d. The end cover body 21 has an outer diameter D. The fourth portion 4323 has a thickness δ, where d ≤ D-2*δ.

In these embodiments, an outer wall of the first insulation member 23 is constructed with a circumferential surface, which is convenient for processing. In addition, when assembling the end cover assembly 2 where the first insulation member 23 is located, the first insulation member 23 does not need to be aligned with the fourth portion 432 circumferentially, which is convenient for the assembling, thereby improving the assembly efficiency.

In some embodiment, as shown in FIG. 7, the accommodation portion 1 has the side wall 11. The second current collector 43 is electrically connected to the end cover body 21 by the side wall 11.

The accommodation portion 1 has the side wall 11 and an end wall 12. One end of the side wall 11 is formed as the opening 111, and is closed by the end cover assembly 2. Another end of the side wall 11 is closed by the end wall 12. The second current collector 43 is electrically connected to the end cover body 21 by the side wall 11. That is, the second current collector 43 is electrically connected to the side wall 11, and the side wall 11 is electrically connected to the end cover body 21. In an exemplary embodiment of the present disclosure, the fourth portion 432 of the second current collector 43 is electrically connected to the side wall 11 through the welding for example. In addition, the welding operation may be carried out at the inside or outside of the accommodation portion 1. The electrical connection between the side wall 11 and the end cover body 21 can be realized through the welding at the opening 111.

In these embodiments, the second current collector 43 is electrically connected to the end cover body 21 by the side wall 11. In this way, requirements on a length of an outer end connection part of the second current collector 43 can be reduced, and requirements on the structure of the end cover body 21 can also be reduced. The end cover body 21 can be designed to have a flat plate structure, and a connection of the end cover body 21 to the second current collector 43 does not need to be considered. As a result, the structure of the end cover body 21 can be simplified, and the manufacturing difficulty can be lowered.

In addition, the second current collector 43 and the side wall 11 can be welded inside the accommodation portion 1. In this way, on the one hand, a welding condition can be easily observed, and thus the welding reliability can be improved. If it is observed the fourth portion 432 is in virtual contact with the side wall of the accommodation portion 1, the welding may be adjusted in time, and a coating on the outer surface of the accommodation portion 1 will not affect the welding, thereby ensuring the welding quality. Moreover, this welding method will not damage the coating outside the accommodation portion 1, and thus can ensure corrosion resistance of the battery cell 100. On the other hand, when the second current collector 43 is a negative current collector, the negative current collector is made of copper, and the accommodation portion 1 is made of steel. Even if microcracks are generated at a weld region and a heat affected region due to differences in thermal expansion coefficients and thermal conductivities between different materials during a laser welding, the microcracks are located at the inner wall surface of the accommodation portion 1, and the battery cell 100 does not occur electrolyte penetration after being used for a long time. Moreover, the accommodation portion 1 will not be corroded at the microcracks.

In some embodiment, as shown in FIG. 18 and FIG 19, the end cover body 21 has a bent portion 212. The bent portion 212 protrudes towards an inner side of the end cover body 21, and is arranged close to the accommodation portion 1. The second current collector 43 is electrically connected to the bent portion 212.

The bent portion 212 may be arranged in a region of the end cover body 21 outside the first electrode lead-out portion 22, and located close to an edge of the end cover body 21. The end cover body 21 may be formed into the bent portion 212 through stamping by using a plate-like structure, and the bent portion 212 may have a U-shaped cross section. An extension length of the bent portion 212 may be same as an extension length of the fourth portion 432. The fourth portion 432 of the second current collector 43 may be welded to a side surface or a bottom surface of the bent portion 212. The second current collector 43 may be in contact with the side wall 11, or there is a gap between the second current collector 43 and the side wall 11.

The fourth portion 432 may extend around the accommodation portion 1. Correspondingly, the bent portion 212 may also extend around the end cover body 21, thereby not only increasing an electrical connection length between the fourth portion 432 and the bent portion 212, but also improving the electrical connection reliability and the overcurrent capability. Moreover, a strength of the end cover body 21 can be enhanced to allow for a uniform strength of the end cover body 21 throughout the circumference.

In these embodiments, the second current collector 43 is electrically connected to the end cover body 21 by the bent portion 212, in this way, a contact area between the second current collector 43 and the end cover body 21 can be increased. For example, when the electrical connection is implemented through the welding, the connection reliability can be improved, and the contact area can be increased. In addition, this structure is also suitable for a case where the accommodation portion 1 is insulated from the end cover body 21 or a case where a weld peeling occurs between the end cover body 21 and the accommodation portion 1, the second current collector 43 can reliably output electric energy to the end cover body 21. Moreover, a problem that the overcurrent capacity is affected due to the thin accommodation portion 1 and the thin end cover body 21.

In some embodiment, as shown in FIG. 18 and FIG. 19, a second gap L2 is formed between the bent portion 212 and the accommodation portion 1. An outer end of the second current collector 43 is located in the second gap L2.

Taking the cylindrical battery cell 100 as an example, the end cover assembly 2 includes an end cover body 21 and a first insulation member 23. The first insulation member 23 is arranged between the end cover body 21 and the current collector assembly 4. A radial inner side wall of the bent portion 212 is attached to the outer wall of the first insulation member 23, and the fourth portion 432 of the second current collector 43 is attached to a radial outer side wall of the bent portion 212. The fourth portion 432 is located in the second gap L2, and the second gap L2 is smaller than the first gap L1. The fourth portion 432 may be in contact with the side wall 11, or a gap may be formed between the fourth portion 432 and the side wall 11. A third gap H may be maintained between the bottom of the bent portion 212 and the third portion 431 of the second current collector 43, which can avoid interference between the bent portion 212 and the third portion 431.

In these embodiments, the second current collector 43 is brought into contact with a side wall of the bent portion 212 facing towards the accommodation portion 1. In this way, the electrical connection through the welding is facilitates, and an electrical connection area between the second current collector 43 and the bent portion 212 can be increased. Therefore, the electrical connection reliability can be improved. and a stable position of the second current collector 43 can be maintained.

In some embodiments, the first tab 32 and the second tab 33 are spaced apart from each other in a circumferential direction of the electrode assembly 3.

The first tab 32 and the second tab 33 are spaced apart from each other in the circumference direction of the electrode assembly 3, which enables that each of the first tab 32 and the second tab 33 extends partially in the circumference direction of the electrode assembly 3. In another exemplary embodiment of the present disclosure, the first tab 32 and the second tab 33 may be opposite to each other. For example, the first tab 32 and the second tab 33 are centrosymmetric with respect to a winding axis K to increase a distance between the first tab 32 and the second tab 33, which is beneficial to ensuring an insulation effect. In another exemplary embodiment of the present disclosure, the first tab 32 and the second tab 33 may be in a sectorial or rectangular shape, or other shape. The first tab 32 and the second tab 33 may have the same shape or different shapes.

In these embodiments, with such an arrangement of the first tab 32 and the second tab 33, tabs with different polarities can be separated from each other better in space, and an electrolyte can also infiltrate into the electrode body 31 through a separated region. Therefore, the electrolyte fully reacts with active substances on the electrode plate during a charging and a discharging of the battery cell 100.

In some embodiments, as shown in FIG. 10, a part of the first current collector 42 connected to the second tab 32 has a shape same as a shape of an end surface of the first tab 32, and/or a part of the second current collector 43 connected to the second tab 33 has a shape same as a shape of an end surface of the second tab 33.

The part of the first current collector 42 connected to the second tab 32 is the first portion 421 arranged in the first opening 413. The part of the second current collector 43 connected to the second tab 33 is the first portion 421, and the third portion 431 is arranged in the second opening 414. Thus, the first portion 421, the first opening 413, and the end surface of the first tab 32 have the same shape. The third portion 431, the second opening 414, and the end surface of the second tab 33 have the same shape.

For the cylindrical battery cell 100, the first tab 32 and the second tab 33 may be designed to have a sectorial shape or a rectangular shape, and a shape of the first opening 413 and a shape of the second opening 414 may be designed based on the shapes of the first tab 32 and the second tab 33.

In this embodiment, an entire end surface of the first tab 32 and/or the second tab 33 can be easily electrically connected to a corresponding current collector to ensure current transmission capability. On this basis, a redundant area of the current collector can be reduced, which in turn saves materials.

In some embodiments, as shown in FIG. 10, a part of the first current collector 42 connected to the first tab 32 covers the first tab 32, and/or a part of the second current collector 43 connected to the second tab 33 covers the second tab 33.

The part of the first current collector 42 connected to the first tab 32 is the first portion 421 arranged in the first opening 413. The part of the second current collector 43 connected to the second tab 33 is the first portion 421, and the third portion 431 is arranged in the second opening 414. The first portion 421 covers the first tab 32 to allow the first tab 32 to be reliably electrically connected to the first portion 421 as a whole, thereby ensuring the current transmission capability. The third portion 431 covers the second tab 33 to allow the second tab 33 to be reliably electrically connected to the third portion 431 as a whole, thereby ensuring the current transmission capability.

In these embodiments, the entire end surface of the first tab 32 and/or the second tab 33 can be electrically connected to the corresponding current collector to ensure the current transmission capability.

In some embodiments, the electrode assembly 3 has a winding structure. At least one of the first tab 32 and the second tab 33 has a width gradually increasing from a center to an outer side of the at least one of the first tab 32 and the second tab 33 in a radial direction of the winding structure.

For example, at least one of the first tab 32 and the second tab 33 may be of a sectorial shape.

In these embodiments, a spacing between first tab portions of each group of adjacent layers of the first tab 32 can be uniformly distributed, or a spacing between second tab portions of each group of adjacent layers of the second tab 33 can be uniformly distributed. In addition, by increasing a width of a tab in an outer layer region in a winding direction, an effective contact area of the tab connected to the current collector can be increased to enhance the overcurrent capability, thereby improving the performance of the battery cell 100.

In another exemplary embodiment of the present disclosure, the electrode assembly 3 is of the winding structure, and at least one of the first tab 32 and the second tab 33 has a constant width from the center to the outer side of the at least one of the first tab 32 and the second tab 33 in the radial direction of the winding structure. For example, at least one of the first tab 32 and the second tab 33 is of a rectangular shape. With such a structure, difficulty of die-cutting the tab can be lowered, and a size of the tab portion can be easily ensured. Therefore, an alignment degree of a plurality of layers of the tab portions during winding can be easily ensured, thereby lowered process difficulty of preparing the electrode assembly 3.

In some embodiment, a surface of the insulation base 41 facing towards the electrode body 31 has a third insulation portion. The third insulation portion is located between the first tab 32 and the second tab 33.

The third insulation portion may be located between the first tab 32 and the second tab 33 in the circumferential direction of the electrode assembly 3, or may also be located between the first tab 32 and the second tab 33 in a radial direction of the electrode assembly 3 without blocking a central hole 311 of the electrode body 31. Therefore, the insulation effect can be enhanced, and an internal air and a high-temperature substance can also be smoothly flow to a pressure relief member at the housing 10 along the central hole 311 when thermal runaway of the battery cell 100 occurs.

In these embodiments, the first tab 32 and the second tab 33 can be further separated from each other by the third insulation portion of the insulation materials on the basis of maintaining a distance between the first tab 32 and the second tab 33 in space. In this way, the insulation reliability can be improved, thereby improving the reliability and safety of the operation of the battery cell 100. Moreover, the third insulation portion is a part of the insulation base 41, and thus there is no need to be provided a separate structure, and an additional fixing is also not required.

A structure of a battery cell 100 of the present disclosure will be descried in two exemplary embodiments by taking the cylindrical battery cell 100 as an example.

FIG. 3 and FIG. 4 illustrate a first embodiment of the present disclosure.

As shown in FIG. 3 and FIG. 4, a battery cell 100 includes a housing 10, an electrode assembly 3, and a current collector assembly 4. The housing 10 includes an accommodation portion 1 and an end cover assembly 2. The end cover assembly 2 is configured to close the opening 111 of accommodation portion 1. The end cover assembly 2 may include an end cover body 21 and a first electrode lead-out portion 22. The end cover body 21 has a second through hole 211, and the first electrode lead-out portion 22 is arranged in a second through hole 211. The first electrode lead-out portion 22 may be an electrode terminal. The accommodation portion 1 serves as a second electrode lead-out portion.

As shown in FIG. 5, the electrode assembly 3 is arranged in the accommodation portion 1. The electrode assembly 3 has a winding structure, and includes an electrode body 31, a first tab 32, and a second tab 33. The electrode body 31 is of a cylindrical shape. The first tab 32 and the second tab 33 extend from one end of the electrode body 31 close to the end cover assembly 2. The first tab 32 and the second tab 33 may be opposite to each other with respect to a winding axis K, and have end surfaces of a sectorial structure or a rectangular structure. For example, the first tab 32 and the second tab 33 are centrosymmetric with respect to the winding axis K. The current collector assembly 4 is located between the end cover assembly 2 and the electrode assembly 3 in a direction of the winding axis K.

As shown in FIG. 6, the end cover assembly 2 further includes a first insulation member 23, a seal 24, a second insulation member 25, and a sealing cover 26. The first insulation member 23 is located between the end cover body 21 and the current collector assembly 4. The end cover body 21 has a disc-like structure, and the first insulation member 23 has an annular structure. A diameter of the first insulation member 23 is smaller than a diameter of the end cover body 21.

The first electrode lead-out portion 22 includes a first section 221, a second section 222, and a third section 223. The second section 222 and the third section 223 are respectively connected to the two ends of the first section 221, and the first section 221 is arranged in the second through hole 211. The second section 222 is arranged outside the end cover body 21. The second insulation member 25 may be arranged between the second section 222 and the end cover body 21. The third section 223 is located at the inner side of the end cover body 21, and the seal 24 may be arranged between the third section 223 and the end cover body 21. The seal 24 is located in the first insulation member 23 of an annular shape. The fourth groove 231 is formed at the surface of the first insulation member 23 close to the current collector assembly 4, and the third section 223 is located in the fourth groove 231. In this way, a surface of the first insulation member 23 facing towards the electrode assembly 3 is flush with a surface of the first electrode lead-out portion 22 facing towards the electrode assembly 3.

An inner surface of the first electrode lead-out portion 22 has a first groove 224, and an outer surface of the first electrode lead-out portion 22 has a second groove 225. A bottom surface of the second groove 225 has a third groove 226. Therefore, a welding thickness of the first electrode lead-out portion 22 can be reduced, and the reliability of the electrical connection between the first electrode lead-out portion 22 and the first current collector 42 can be improved. A liquid injection hole 227 is formed at a bottom surface of the third groove 226 for an injection of an electrolyte.

As shown in FIG. 7, the second current collector 43 includes a third portion 431 and a fourth portion 432 connected to each other. The third portion 431 is welded to the second tab 33. The fourth portion 432 is bent towards the end cover body 21 relative to the third portion 431, and is located in a gap between the first insulation member 23 and the accommodation portion 1. The fourth portion 432 is electrically connected to the side wall of the accommodation portion 1 through welding. The third portion 431 is covered with the insulation sheet 6 to insulate the third portion 431 from the first electrode lead-out portion 22.

As shown in FIG. 8, the first current collector 42 includes a first portion 421 and a second portion 422 connected to each other. The second portion 422 protrudes towards the first electrode lead-out portion 22 relative to the first portion 421, and the protruding part may further be located in the first groove 224. A surface of the first portion 421 is covered by the spacer 5. A surface of the spacer 5 facing towards the first electrode lead-out portion 22 and a surface of the insulation sheet 6 facing towards the first electrode lead-out portion 22 are flush with each other to provide stable support for the first electrode lead-out portion 22 and the first insulation member 23.

As shown in FIG. 9, the current collector assembly 4 includes an insulation base 41, the first current collector 42, and the second current collector 43. The insulation base 41, the first current collector 42, and the second current collector 43 may be integrally formed through injection molding. The first current collector 42 and the second current collector 43 are insulated from each other by the insulation base 41.

As shown in FIG. 10, the insulation base 41 includes a first insulation portion 411 and a second insulation portion 412 arranged in a central region of the first insulation portion 411. The first insulation portion 411 has a circular plate-shaped structure, and the first opening 413 and the second opening 414 are formed at the first insulation portion 411. The first opening 413 and the second opening 414 are opposite to each other, and have a sectorial structure with an inner circular arc. The second insulation portion 412 protrudes towards the end cover assembly 2 relative to the first insulation portion 411. A diameter of the first insulation portion 411 is greater than a diameter of a circular arc-shaped outer wall of the first opening 413. The second opening 414 extends through an outer edge of the first insulation portion 411.

The first current collector 42 includes the first portion 421 and the second portion 422. The first portion 421 is engaged with the first opening 413 and electrically connected to the first tab 32. The second portion 422 is connected to first portion 421 and overlaps with the second insulation portion 412. The second portion 422 protrudes towards the first electrode lead-out portion 22 relative to first portion 421. The second portion 422 is electrically connected to the first electrode lead-out portion 22. The second current collector 43 includes the third portion 431 and the fourth portion 432. The third portion 431 is engaged with the second opening 414 and electrically connected to the second tab 33. The fourth portion 432 is angled to the third portion 431, and electrically connected to the side wall 11 of the accommodation portion 1. In this way, the second current collector 42 can be electrically connected to the end cover body 21 by the side wall 11.

As shown in FIG. 11A and FIG. 11B, each of two corners of the first portion 421 away from the second portion 422 has a first notch 425. The first notch 425 is configured to engage with a first positioning portion in an injection mold to position the first current collector 42. Each of the two corners of the third portion 431 away from the fourth portion 432 has a second notch 433. The second notch 433 is configured to engage with the second positioning portion in the injection mold to position the second current collector 43.

As shown in FIG. 12A and FIG. 12B, the first portion 421 may be in a sectorial structure, and at least one of the outer circular arc-shaped wall of the first portion 421 and two side walls of the first portion 421 is provided with a protrusion 423. A thickness of the protrusion 423 may be same as a thickness of the first portion 421, or considering that the thickness of the insulation base 41 is relatively small, in order to still ensure the strength of the insulation base 41 after the second groove 415 is formed, the thickness of the protrusion 423 may be smaller than the thickness of the first portion 421. The protrusion 423 arranged at the side wall of the first portion 421 may be of a rectangular shape, and a length of the protrusion 423 may be smaller than a length of the side wall. The protrusion 423 arranged on the outer arc wall of the first portion 421 may be arc-shaped, and the length of the protrusion 423 may be smaller than the length of the outer arc wall. A shape and a size of the second groove 415 are adapted to the protrusion 423.

As shown in FIG. 13A and FIG. 13B, a part of the second current collector 43 engaged with the second opening 414 is the third portion 431, and the third portion 431 may be in a sectorial structure. At least one of two side walls of the third portion 431 may be provided with the protrusion 423. The thickness of the protrusion 423 may be same as the thickness of the third portion 431, or considering that the thickness of the insulation base 41 is relatively small, in order to ensure the strength of the insulation base 41 even after the second groove 415 is formed, the thickness of the protrusion 423 may also be smaller than the thickness of the third portion 431.

As shown in FIG. 14, a first through hole 424 is formed at the protrusion 423, and a limit post 416 is arranged at the insulation base 41. The limit post 416 is embedded in the first through hole 424. The second groove 415 and the limit post 416 are formed naturally during the injection molding.

FIG. 15 to FIG. 20 illustrate a second embodiment of the present disclosure, and the second embodiment differs from the first embodiment as follows.

The second current collector 43 includes a third portion 431 and a fourth portion 432. The third portion 431 is engaged to the second opening 414 and is electrically connected to the second tab 33. The fourth portion 432 is angled to the third portion 431 and extends around the accommodation portion 1. The third portion 431 and the fourth portion 432 may be connected to an edge of the third portion 431 close to the accommodation portion 1 through the welding. The remaining length sections of the fourth portion 432 are connected to the insulation base 41 through the injection molding. The fourth portion 432 is bent upwards and electrically connected to a radial outer side wall of the bent portion 212 on end cover body 21. The fourth portion 432 is located in a second gap L2 formed between bent portion 212 and accommodation portion 1. The second current collector 43 is electrically connected to the end cover body 21 directly.

The second insulation portion 412 is flush with a surface of the first insulation portion 411 facing towards the end cover assembly 2. The first current collector 42 includes a first portion 421 and a second portion 422 connected to each other. The second portion 422 overlaps with the second insulation portion 412. There is a height difference between the first portion 421 and the second portion 422. The first portion 421 and the second portion 422 are connected to each other by the connection portion 426.

The battery cell 100 is assembled as follows. after the current collector assembly 4 is placed at the end of the electrode assembly 3, the first current collector 42 is welded to the first tab 32, and the second current collector 43 is welded to the second tab 33, the end cover assembly 2 is mounted. Then, the first electrode lead-out portion 22 and the first current collector 42 are welded from outside. The fourth portion 432 of the first current collector 42 is welded to the bent portion 212. Finally, the electrode assembly 3 and the end cover assembly 2 are assembled into the accommodation portion 1, and then the end cover body 21 and the accommodation portion 1 are sealed at the opening 111 through the welding.

As shown in FIG. 21, for an embodiment in which the first electrode lead-out portion 22 is arranged at the end cover body 21 and the end cover body 21 serves as the second electrode lead-out portion, a plurality of battery cells 100 may be electrically connected to each other as follows.

In some embodiments, at least two battery cells 100 are provided. The battery 200 further includes a busbar 202. The busbar 202 has a first end connected to the first electrode lead-out portion 22 of one of the at least two battery cells 100 and a second end connected to the second electrode lead-out portion of another one of the at least two battery cells 100. The busbar 202 may be constructed with a metal sheet-like or plate-like structure. This embodiment can conveniently realize an electrical connection of the plurality of battery cells 100.

In some embodiments, the housing 100 includes an accommodation portion 1 having an opening 111, and an end cover assembly 2 covering the opening 111. The end cover assembly 2 includes an end cover body 21 and a first electrode lead-out portion 22 arranged at the end cover body 21 in an insulation manner. The second end of the busbar 202 is connected to the end cover body 21.

The first electrode lead-out portion 22 may be arranged at the center of the end cover body 21, which is beneficial to increase a width of the busbar 202 and increase the cross-sectional area of the first electrode lead-out portion 22, thereby improving the overcurrent capability. In an exemplary embodiment of the present disclosure, the busbar 202 may include a strip-shaped portion and two bifurcated portions. Each of the two bifurcated portions is connected to a first end of the strip-shaped portion. The two bifurcated portions are respectively located at two sides of the first electrode lead-out portion 22, and attached to an outer surface of the end cover body 21 of one battery cell 100. A second end of the strip-shaped portion is connected to a top surface of the first electrode lead-out portion 22 of another battery cell 100. Since the top surface of the first electrode lead-out portion 22 is higher than the surface of the end cover body 21, a bent structure may be arranged at the strip-shaped portion to adapt to the height difference between the first electrode lead-out portion 22 and the end cover body 21.

In another exemplary embodiment of the present disclosure, at least one row of battery cells 100 is arranged in the battery 200, and the busbars 202 in each row of battery cells 100 are sequentially connected to each other.

In this embodiment, the electrical connection of the plurality of battery cells 100 can be can be conveniently realized, thereby allowing for a more compact layout of the plurality of battery cells 100. Further, it is conducive to increasing the width of the busbar 202, thereby improving the overcurrent capability.

According to embodiments of the present disclosure, a method for manufacturing a battery cell 100 is provided. The method includes operations at blocks S110 to S130.

At block S110, providing a housing includes providing a housing 10. The housing 10 is provided with a first electrode lead-out portion 22 and a second electrode lead-out portion that have opposite polarities.

At block S120, assembling an electrode includes providing an electrode assembly 3 and arranging the electrode assembly 3 in the housing 10. The electrode assembly 3 includes an electrode body 31, and a first tab 32 and a second tab 33 that extend from one side of the electrode body 31.

At block S130, performing an electrical connection includes arranging a current collector assembly 4 including a first current collector 42 and a second current collector 43 at a side of the electrode body 31 close to the first tab 32 and the second tab 33, electrically connecting the first tab 32 and the first electrode lead-out portion 22 to each other by the first current collector 42, and electrically connecting the second tab 33 and the second electrode to each other by the second current collector 43.

The operations at block S110 to block S130 are performed sequentially.

In these embodiments, the first tab 32 and the second tab 33 extend from the same end of the electrode body 31. Thus, only one end of the electrode assembly 3 needs to reserve the electrical connection space, and there is no need for two ends of the battery cell 100 to be provided with electrode lead-out portions. In this way, an overall energy density of the battery cell 100 can be effectively improved. In addition, a volume of the battery cell 100 can be reduced when the capacity of the battery cell 100 is constant. As a result, the battery 200 can be more easily mounted at an electric device with a limited height space, or when of the battery cell 100 has a constant volume, the capacity of the battery cell can be improved and the endurance capacity of the battery 200 is expanded.

In some embodiments, the manufacturing method of the present disclosure further includes: connecting the first current collector 42 and the second current collector 43 to the insulation base 41, and insulating the first current collector 42 and the second current collector 43 from each other by the insulation base 41.

The manufacturing method of this embodiment can simply an electrical connection structure inside the battery cell 100, and can further save an internal space of the battery cell 100. In addition, with this structure, a weight can be reduced, and production cost of components can be lowered. The first current collector 42 and the second current collector 43 are supported by the insulation base 41, which can improve an overall rigidity, and thus deformation does not easily occur. Therefore, a stable mounting can be realized, thereby improving electrical connection reliability. Moreover, since there is no need to separately mounting the first current collector, the second current collector, and the insulation base, this design can also lower the assembly difficulty. As a result, it is advantages for a battery cell with a smaller cross section size, and assembly efficiency can be improved. In addition, the first current collector and the second current collector are insulated from each other through the insulation base integrated with the first current collector and the second current collector. Therefore, insulation reliability can be improved, and an influence of assembly error or vibration on insulation performance can be reduced, thereby improving reliability and safety of the battery cell during its operation.

The manufacturing method of this embodiment simplifies the electrical connection structure inside the battery cell 100, which may further save the internal space of the battery cell 100. In addition, this structure reduces the weight and saves production costs of components. The first current collector 42 and the second current collector 43 are supported by the insulation base 41, which can improve the overall rigidity, and deformation is not easily generation. Therefore, a stable mounting can be provided, thereby improving the electrical connection reliability. Moreover, since there is no need to separately mounting the first current collector 42, the second current collector 43, and the insulation base 41, this design can also lower the assembly difficulty. As a result, it is advantages for a battery cell 100 with a smaller cross section size, and assembly efficiency can be improved. In addition, the first current collector 42 and the second current collector 43 are insulated from each other through the insulation base 41 integrated with the first current collector 42 and the second current collector 43. Therefore, insulation reliability can be improved, and an influence of assembly error or vibration on insulation performance can be reduced, thereby improving reliability and safety of the battery cell 100 during its operation.

In some embodiments, the housing 10 includes an accommodation portion 1 having an opening 111 and an end cover assembly 2 closing the opening 111. The end cover assembly 2 includes an end cover body 21 and a first electrode lead-out portion 22 arranged at the end cover body 21. The end cover assembly 21 serves as the second electrode lead-out portion. Performing the electrical connection at block S130 includes operations at blocks S131 to S134.

At block S131, the first tab 32 and the second tab 33 are welded to first current collector 42 and the second current collector 43, respectively.

At block S132, the second current collector 43 is electrically connected to the end cover body 21.

At block S133, the opening 111 is closed by the end cover body21.

At block S134, the first current collector 42 is welded to the first electrode lead-out portion 22 outside.

At block S131, the first tab 32 is welded to the first portion 421 of the first current collector 42, and the second tab 33 is welded to the third portion 431 of the second current collector 43, e.g., through laser welding.

After the operation at block S131, an order of preforming of the operations at block S132 and block S133 can be selected based on needs of a specific structure. At block S132, the second current collector 43 may be electrically connected to the end cover body 21 directly, or the second current collector 43 may be electrically connected to the end cover body 21 by the side wall 11 of the accommodation portion 1. At block S134, the second portion 422 of the first current collector 42 is welded to the first electrode lead-out portion 22 from outside the end cover assembly 2. After welding, the sealing cover 26 may be mounted at the first electrode lead-out portion 22 to close the liquid injection hole 227.

In this embodiment, the electrical connection between the first current collector 42 and the first electrode lead-out portion 22 as well as the electrical connection between the second current collector 43 and the accommodation portion 1 can be realized.

In some embodiments, as shown in FIG. 3 to FIG. 14, the accommodation portion 1 has a side wall 11. The accommodation portion 1 is electrically connected to the end cover body 21. Electrically connecting the second current collector 43 to the end cover body 21 at block S132 includes electrically connecting the second current collector 43 to the sidewall 11, and electrically connecting the sidewall 11 to the end cover body 21.

The second current collector 43 is electrically connected to the end cover body 21 by the side wall 11. That is, the second current collector 43 is electrically connected to the side wall 11, and the side wall 11 is electrically connected to the end cover body 21. In an exemplary embodiment of the present disclosure, the fourth portion 432 of the second current collector 43 is electrically connected to the side wall 11, e.g. through the welding, which can be performed from the inside or outside of the accommodation portion 1. The electrical connection between the side wall 11 and the end cover body 21 can be realized at the opening 111 through the welding.

In these embodiments, the second current collector 43 is electrically connected to the end cover body 21 by the side wall 11, which can reduce requirements on a length of an outer end connection part of the second current collector 43 and requirements on the structure of the end cover body 21. The end cover body 21 can be designed to have a flat plate structure without considering a connection problem of the end cover body 21 with the second current collector 43, which can simplify the structure of the end cover body 21 and lower the manufacturing difficulty.

In some embodiments, the second current collector 43 is welded to the side wall 11 inside the accommodation portion 1.

In another exemplary embodiment of the present disclosure, the operation at block S132 is performed before the operation at block S133. At block S132, the fourth portion 432 of the second current collector 43 can be welded to the side wall of the accommodation portion 1 inside the accommodation portion 1. In this way, welding can be easily observed, and welding reliability can be improved. If it is observed the fourth portion 432 is in virtual contact with the side wall of the accommodation portion 1, the welding may be adjusted in time, and a coating on the outer surface of the accommodation portion 1 will not affect the welding, thereby ensuring the welding quality. Moreover, this welding method will not damage the coating outside the accommodation portion 1, and thus can ensure corrosion resistance of the battery cell 100. After the operation at block S132, the end cover assembly 2 is mounted at the opening 111 of accommodation portion 1. In another exemplary embodiment of the present disclosure, the operation at block S133 is performed prior to operation at block S132. The end cover assembly 2 is firstly mounted at the opening 111 of the accommodation portion 1, and then the fourth portion 432 is welded to the side wall of the accommodation portion 1 outside the accommodation portion 1.

Moreover, by this method, welding the second current collector 43 and the side wall 11 inside the accommodation portion 1 can be implemented. When the second current collector 43 is a negative current collector, the negative current collector is made of copper, and the accommodation portion 1 is made of steel. Even if microcracks are generated at a weld region and a heat affected region due to differences in thermal expansion coefficients and thermal conductivities between different materials during the laser welding, the microcracks are located at the inner wall surface of the accommodation portion 1, and the battery cell 100 does not occur electrolyte penetration after being used for a long time. Moreover, the accommodation portion 1 will not be corroded at the microcracks.

In some embodiments, the second current collector 43 includes a third portion 431 electrically connected to the second tab 43 and a fourth portion 432 at least connected to an edge of the third portion 431 close to the accommodation portion 1. The fourth portion 432 is angled to the third portion 431, and the fourth portion 432 is electrically connected to the side wall 11. The manufacturing method further includes: positioning the fourth portion 432 and the third portion 431 relative to each other by an obtuse angle before placing the current collector assembly 4 into the accommodation portion 1.

For example, the angle may be greater than 90° and smaller than or equal to 120°.

In these embodiments, before the current collector assembly 4 is placed into the accommodation portion 1, the fourth portion 432 is bent and adjusted to form an obtuse angle between the fourth portion 432 and the third portion 431. That is, a free end of the fourth portion 432 is expanded outwards relative to an end connected to the third portion 431. Thus, after the current collector assembly 4 is placed into the accommodation portion 1, the fourth portion 432 is retracted inwards under an action of the side wall of the accommodation portion 1. As a result, an interference fit between the fourth portion 432 and the side wall of accommodation portion 1 can be ensured, thereby ensuring the welding effect and improving the electrical connection reliability.

Although the present disclosure has been described with reference to preferred embodiments, various modifications may be made thereto and equivalents may be substituted for parts thereof without departing from the scope of the present disclosure. In particular, the technical features mentioned in the various embodiments can be combined in any way as long as there are no structural conflicts. The present disclosure is not limited to the specific embodiments disclosed herein, but includes all technical solutions falling within the scope of the claims.

## Claims

1. A battery cell (100), comprising:
a housing (10) provided with a first electrode lead-out portion (22) and a second electrode lead-out portion that have opposite polarities;
an electrode assembly (3) arranged in the housing (10), the electrode assembly (3) comprising an electrode body (31), and a first tab (32) and a second tab (33) that extend from one side of the electrode body (31); and
a current collector assembly (4) arranged at a side of the electrode body (31) close to the first tab (32) and the second tab (33), the current collector assembly (4) comprising a first current collector (42) and a second current collector (43), the first tab (32) and the first electrode lead-out portion (22) being electrically connected to each other by the first current collector (42), and the second tab (33) and the second electrode lead-out portion being electrically connected to each other by the second current collector (43).

2. The battery cell (100) according to claim 1, wherein the first current collector (42) at least partially abuts with a surface of the first tab (32) facing away from the electrode body (31); and
the second current collector (43) at least partially abuts with a surface of the second tab (33) facing away from the electrode body (31).

3. The battery cell (100) according to claim 1 or 2, wherein the housing (10) comprises:
an accommodation portion (1) having an opening (111); and
an end cover assembly (2) covering the opening (111), the end cover assembly (2) comprising an end cover body (21) and the first electrode lead-out portion (22), the first electrode lead-out portion (22) being arranged at the end cover body (21) in an insulation manner, and the end cover assembly (21) serving as the second electrode lead-out portion,
wherein the second current collector (43) is electrically connected to the end cover body (21).

4. The battery cell (100) according to claim 3, wherein the current collecting assembly (4) further comprises an insulation base (41); and
the first current collector (42) and the second current collector (43) are connected to the insulation base (41) and insulated from each other by the insulation base (41).

5. The battery cell (100) according to claim 4, wherein the first current collector (42), the second current collector (43), and the insulation base (41) are integrally formed through injection molding.

6. The battery cell (100) according to claim 4 or 5, wherein the insulation base (41) comprises a first insulation portion (411) having a first opening (413) and a second opening (414), the first current collector (42) being at least partially accommodated in the first opening (413), and the second current collector (43) being at least partially accommodated in the second opening (414); and
the first insulation portion (411) is partially located between the first opening (413) and the second opening (414) and separates the first current collector (42) from the second current collector (43).

7. The battery cell (100) according to claim 6, wherein an inner side wall of the first opening (413) has a second groove (415), and the first current collector (42) is provided with a protrusion (423) at an outer side wall of the first current collector (42) engaged with the first opening (413), the protrusion (423) being embedded into the second groove (415) to join the first current collector (42) to the insulation base (41); and/or
an inner side wall of the second opening (414) has a second groove (415), and the second current collector (43) is provided with a protrusion (423) at an outer side wall of the second current collector (43) engaged with the second opening (414), the protrusion (423) being embedded into the second groove (415) to join the second current collector (43) to the insulation base (41).

8. The battery cell (100) according to claim 7, wherein the protrusion (423) has a first through hole (424); and
the insulation base (41) is provided with a limit post (416) embedded into the first through hole (424).

9. The battery cell (100) according to any one of claims 6 to 8, further comprising an insulation sheet (6) arranged between the second current collector (43) and the first electrode lead-out portion (22).

10. The battery cell (100) according to claim 9, further comprising a spacer (5) arranged between the first current collector (42) and the first electrode lead-out portion (22),
wherein a surface of the spacer (5) facing towards the end cover assembly (2) and a surface of the insulation sheet (6) facing towards the end cover assembly (2) are flush with each other, and are flush with or higher than a surface of the first insulation portion (411).

11. The battery cell (100) according to any one of claims 4 to 8, wherein an edge of the first current collector (42) close to the accommodation portion (1) is surrounded by the insulation base (41).

12. The battery cell (100) according to any one of claims 3 to 11, wherein the end cover assembly (2) further comprises a first insulation member (23) arranged between the end cover body (21) and the current collector assembly (4), an end surface of the first insulation member (23) closest to the electrode assembly (3) being flush with an end surface of the first electrode lead-out portion (22) closest to the electrode assembly (3).

13. The battery cell (100) according to any one of claims 4 to 11, wherein:
the insulation base (41) comprises:
a first insulation portion (411) having the first opening (413); and
a second insulation portion (412) connected to the first insulation portion (411); and the first current collector (42) comprises:
a first portion (421) engaged with the first opening (413) and electrically connected to the first tab (32); and
a second portion (422) connected to the first portion (421) and overlapping with the second insulation portion (412), the second portion (422) being electrically connected to the first electrode lead-out portion (22).

14. The battery cell (100) according to claim 13, wherein the first electrode lead-out portion (22) is arranged at a central region of the end cover body (21); and
the second insulation portion (412) is arranged at a central region of the first insulation portion (411).

15. The battery cell (100) according to claim 14, wherein a projection of the first electrode lead-out portion (22) on a cross-section of the accommodation portion (1) overlaps with a projection of the second current collector (43) on the cross-section of the accommodation portion (1);
the second insulation portion (412) protrudes towards the first electrode lead-out portion (22) relative to the first insulation portion (411); and
the second portion (422) protrudes towards the first electrode lead-out portion (22) relative to the first portion (421).

16. The battery cell (100) according to claim 15, wherein the first electrode lead-out portion (22) has a first groove (224) formed at an inner end surface of the first electrode lead-out portion (22), the second portion (422) being at least partially located in the first groove (224).

17. The battery cell (100) according to claim 15, wherein the end cover assembly (2) further comprises a first insulation member (23) arranged between the end cover body (21) and the current collector assembly (4), the first insulation member (23) covering a region outside an inner end surface of the first electrode lead-out portion (22) in a radial direction of the first electrode lead-out portion (22), and the first groove (224) being formed by the first insulation member (23) and the inner end surface of the first electrode lead-out portion (22); and
the second portion (422) is at least partially located in the first groove (224).

18. The battery cell (100) according to claim 16 or 17, wherein the first groove (224) has a depth equal to or smaller than a height by which the second portion (422) protrudes from the first portion (421).

19. The battery cell (100) according to any one of claims 13 to 18, wherein the second insulation portion (412) has a side wall located outside the first opening (413) and extending beyond an outer side wall of the second portion (422).

20. The battery cell (100) according to any one of claims 13 to 19, wherein at least one corner of the first portion (421) facing away from the second portion (422) has a first notch (425) configured to be engaged with a first positioning portion in an injection mold to position the first current collector (42).

21. The battery cell (100) according to any one of claims 4 to 11 and 13 to 20, wherein the insulation base (41) comprises a first insulation portion (411) having a second opening (414); and
the second current collector (43) comprises:
a third portion (431) engaged with the second opening (414) and electrically connected to the second tab (33); and
a fourth portion (432) at least partially connected to an edge of the third portion (431) close to the accommodation portion (1), the fourth portion (432) being electrically connected to the end cover body (21).

22. The battery cell (100) according to claim 21, wherein at least one corner of the third portion (431) facing away from the fourth portion (432) has a second notch (433) configured to be engaged with a second positioning portion in an injection mold to position the second current collector (43).

23. The battery cell (100) according to claim 21 or 22, wherein an extension length of the fourth portion (432) in a circumferential direction of the accommodation portion (1) is equal to or smaller than the edge of the third portion (431) close to the accommodation portion (1).

24. The battery cell (100) according to claim 21 or 22, wherein the fourth portion (432) extends around the accommodation portion (1).

25. The battery cell (100) according to any one of claims 21 to 24, wherein the fourth portion (432) is angled to the third portion (431).

26. The battery cell (100) according to any one of claims 21 to 25, wherein the fourth portion (432) extends towards the end cover assembly (2).

27. The battery cell (100) according to claim 26, wherein the accommodation portion (1) has a side wall (11);
the end cover assembly (2) further comprises a first insulation member (23) arranged between the end cover body (21) and the current collector assembly (4), a first gap (L1) being at least formed at a region corresponding to the fourth portion (432) between the first insulation member (23) and the side wall (11), and the fourth portion (432) being located in the first gap (L1).

28. The battery cell (100) according to claim 27, wherein the housing (10) is of a cylindrical shape;
the first insulation member (23) is of a circular ring shape;
the first insulation member (23) has an outer diameter d,
the end cover body (21) has an outer diameter D; and
the fourth portion (432) has a thickness δ, where d ≤ D-2*δ.

29. The battery cell (100) according to any one of claims 3 to 28, wherein the accommodation portion (1) has a side wall (11), the second current collector (43) being electrically connected to the end cover body (21) by the side wall (11).

30. The battery cell (100) according to any one of claims 3 to 28, wherein the end cover body (21) has a bent portion (212) protruding towards an inner side of the end cover body (21) and arranged close to the accommodation portion (1), the second current collector (43) being electrically connected to the bent portion (211).

31. The battery cell (100) according to claim 30, wherein a second gap (L2) is formed between the bent portion (211) and the accommodation portion (1), an outer end of the second current collector (43) being located in the second gap (L2).

32. The battery cell (100) according to any one of claims 1 to 31, wherein the first tab (32) and the second tab (33) are spaced apart from each other in a circumferential direction of the electrode assembly (3).

33. The battery cell (100) according to any one of claims 1 to 32, wherein a part of the first current collector (42) connected to the second tab (32) has a shape same as a shape of an end surface of the first tab (32); and/or
a part of the second current collector (43) connected to the second tab (33) has a shape same as a shape of an end surface of the second tab (33).

34. The battery cell (100) according to any one of claims 1 to 33, wherein a part of the first current collector (42) connected to the first tab (32) covers the first tab (32); and/or
a part of the second current collector (43) connected to the second tab (33) covers the second tab (33).

35. The battery cell (100) according to any one of claims 1 to 34, wherein the electrode assembly (3) has a winding structure; and
at least one of the first tab (32) and the second tab (33) has a width gradually increasing from a center to an outer side of the at least one of the first tab (32) and the second tab (33) in a radial direction of the winding structure.

36. A battery (200), comprising the battery cell (100) according to any one of claims 1 to 35.

37. The battery (200) according to claim 36, wherein at least two battery cells (100) are provided; and
the battery (200) further comprises a busbar (202), the busbar (202) having a first end connected to the first electrode lead-out portion (22) of one of the at least two battery cells (100) and a second end connected to the second electrode lead-out portion of another one of the at least two battery cells (100).

38. The battery (200) according to claim 37, wherein the housing (10) comprises:
an accommodation portion (1) having an opening (111); and
an end cover assembly (2) covering the opening (111), the end cover assembly (2) comprising an end cover body (21) and the first electrode lead-out portion (22), the first electrode lead-out portion (22) being arranged at the end cover body (21) in an insulation manner,
wherein the second end of the busbar (202) is connected to the end cover body (21).

39. An electric device, comprising the battery cell (100) according to any one of claims 1 to 35 and/or the battery (200) according to any one of claims 36 to 38,
wherein the battery cell (100) or the battery (200) is configured to supply electric energy to the electric device.

40. A method for manufacturing a battery cell (100), the method comprising:
a step of providing a housing comprising providing a housing (10) provided with a first electrode lead-out portion (22) and a second electrode lead-out portion that have opposite polarities;
a step of assembling an electrode comprising providing an electrode assembly (3) and arranging the electrode assembly (3) in the housing (10), wherein the electrode assembly (3) comprises an electrode body (31), and a first tab (32) and a second tab (33) that extend from one side of the electrode body (31); and
a step of performing an electrical connection comprising arranging a current collector assembly (4) comprising a first current collector (42) and a second current collector (43) at a side of the electrode body (31) close to the first tab (32) and the second tab (33), electrically connecting the first tab (32) and the first electrode lead-out portion (22) to each other by the first current collector (42), and electrically connecting the second tab (33) and the second electrode to each other by the second current collector (43).

41. The method according to claim 40, wherein the housing (10) comprises an accommodation portion (1) having an opening (111), and an end cover assembly (2) closing the opening (111), the end cover assembly (2) comprising an end cover body (21) and the first electrode lead-out portion (22), the first electrode lead-out portion (22) being arranged at the end cover body (21) in an insulation manner, and the end cover assembly (21) serving as the second electrode lead-out portion; and
the step of performing the electrical connection comprises:
welding the first tab (32) and the second tab (33) to first current collector (42) and the second current collector (43), respectively;
electrically connecting the second current collector (43) to the end cover body (21);
closing the opening (111) by the end cover body (21); and
welding the first current collector (42) to the first electrode lead-out portion (22) outside the end cover assembly (2).

42. The method according to claim 41, wherein the accommodation portion (1) has a side wall (11) and electrically connected to the end cover body (21); and
the step of electrically connecting the second current collector (43) to the end cover body (21) comprises:
electrically connecting the second current collector (43) to the side wall (11), and electrically connecting the side wall (11) to the end cover body (21).

43. The method according to claim 42, wherein the second current collector (43) is welded to the side wall (11) inside the accommodation portion (1).

44. The method according to claim 42 or 43, wherein the second current collector (43) comprises a third portion (431) electrically connected to the second tab (33) and a fourth portion (432) at least connected to an edge of the third portion (431) close to the accommodation portion (1), the fourth portion (432) being electrically connected to the side wall (11); and
the manufacturing method further comprising:
positioning the fourth portion (432) and the third portion (431) relative to each other by an obtuse angle before placing the current collector assembly (4) into the accommodation portion (1).
